# EUROPEAN PATENT APPLICATION

(11) **EP 4 841 465 A1**
(43) Date of publication of application: **18.11.2026**
(21) Application number: 26179017.4
(22) Date of filing: 15.05.2026
(51) Int. Cl.: G06F 16/332, G06F 16/3329, G06F 16/9532, G06F 16/9535

(54) **NEXT INTENT CONTENT TARGETING FOR SEARCH ARTIFICIAL INTELLIGENCE (AI) ASSISTANT**

(30) Priority: 16.05.2025 US 202563807337 P; 17.04.2026 US 202619651141
(71) Applicant: Google LLC, Mountain View, CA 94043 (US)
(72) Inventor: LEROY, Vincent, 8002 Zürich (CH); ROTHUIZEN, Dorthea Weismann, 8002 Zurich (CH); KLUSER, Dan Beat, 8002 Zürich (CH); POSTÄVARU, Stefan, 8002 Zürich (CH); SLOWINSKI, Witold Zbigniew, 8002 Zürich (CH); MERGEN, Gokhan, Mountain View, 94043 (US); CHEN, Baixu, Mountain View, 94043 (US); DUBEY, Kumar Avinava, Mountain View, 94043 (US); BORATKO, Michael James, Mountain View, 94043 (US); DUDDU, Sai Meher Karthik, Mountain View, 94043 (US); JOHNSRUD, James Kuczmarski, Mountain View, 94043 (US); NAIM, Iftekhar, Mountain View, 94043 (US); MITTAL, Siddhant, Mountain View, 94043 (US)
(74) Representative: Marks & Clerk GST

(57) **Abstract**

Techniques for generating a proxy phrase based on a user query. The system can include a first machine-learned model. The system can obtain a user query and process the user query to generate a plurality of subqueries. Additionally, the system can generate a plurality of search results based on the plurality subqueries. Moreover, the system can process, using the first machine-learned model, the plurality of search results to generate a first proxy phrase. Furthermore, the system can calculate, using the first machine-learned model and based on the plurality of search results, a ranking score for the first proxy phrase. Subsequently, the system can obtain from a content server and based on the ranking score, a first content item associated with the first proxy phrase.

## Description

### FIELD

The present disclosure relates generally to generating a proxy phrase to a user query using AI techniques to retrieve content items from a content server, and more specifically generating the proxy phrase based on the intent of the user query.

### BACKGROUND

In a conventional system, a search result page can include sitelinks to a plurality of webpages of different entities in response to a user query. In some instances, a user may have to navigate the plurality of webpages to find an answer to a user query, which can reduce the user experience. For example, a user may struggle to find an answer or perform an action associated with the user query when the webpages are not efficiently designed for usability and engagement.

To improve the user experience and engagement, the content presented to a user should be relevant to the user query, and the user interface should be easy to navigate with an intuitive design to improve usability and engagement.

### SUMMARY

Aspects and advantages of embodiments of the present disclosure will be set forth in part in the following description, or can be learned from the description, or can be learned through practice of the embodiments.

A system of one or more computers can be configured to perform particular operations or actions by having software, firmware, hardware, or a combination of them installed on the system that in operation cause or causes the system to perform the actions. One or more computer programs can be configured to perform particular operations or actions by virtue of including instructions that, when executed by data processing apparatus, cause the apparatus to perform the actions. One general aspect includes a computing system. The computing system also includes one or more processors. The system also includes one or more non-transitory computer-readable media that collectively store: a first machine-learned model, where the first machine-learned model is configured to generate a proxy phrase based on a user query; and instructions that, when executed by the one or more processors, cause the computing system to perform operations, the operations may include: obtaining a user query, the user query being associated with a first category; processing, using the first machine-learned model, the user query to generate a plurality of subqueries, the plurality of subqueries being associated with subcategories of the first category; generating a plurality of search results based on the plurality subqueries; processing, using the first machine-learned model, the plurality of search results to generate a first proxy phrase; calculate, using the first machine-learned model and based on the plurality of search results, a ranking score for the first proxy phrase; and obtaining, from a content server and based on the ranking score, a first content item associated with the first proxy phrase. Other embodiments of this aspect include corresponding computer systems, apparatus, and computer programs recorded on one or more computer storage devices, each configured to perform the actions of the methods.

In some examples, the first proxy phrase can be generated using the user query and the plurality of search results. Additionally, the AI search answer can also be generated using the user query and the plurality of search results.

In some examples, the first proxy phrase can be generated using the user query and the AI search answer. Additionally, the AI search answer can be generated from the plurality of search results and the first machine-learned model's internal knowledge.

Implementations may include one or more of the following features. The computing system may include an AI search assistant configured to generate an answer to the user query, the operations may include: causing a presentation of the first content item with the answer on a display of a user device. The obtaining of the first content item is performed in parallel to generating the ai search assistant generating an answer to the user query. The computing system the operations may include: processing, using the ai search assistant, the user query to generate an approximate answer; and calculating the ranking score based on a similarity between the first proxy phrase and the approximate answer. The first proxy phrase includes a plurality of words that are similar to words in the approximate answer. The first content item is not retrieved from a content server when the ranking score is below a threshold value. The ranking score is below a threshold value when the user query is a non-commercial query. The computing system the operations may include: obtaining a search result for each of the subcategories of the first category to generate the plurality of search results; and generating a plurality of keywords based on an analysis of the plurality of search results. The plurality of keywords is based on a summary of key points associated with the search result for each of the subcategories of the first category. The computing system the operations may include: calculating the ranking score for the first proxy phrase based on the plurality of keywords. The first content item is also based on the second proxy phrase. The computing system the operations may include: obtaining, from a content server, a second content item associated with the second proxy phrase. The first machine-learned model is trained using a plurality of large language models (LLMs). The computing system the operations may include: obtaining user information and contextual information associated with the user query, the contextual information including a previous query; and processing, using the first machine-learned model, the user information, the contextual information, the plurality of search results to generate the first proxy phrase. The computing system's operations may include: processing, using the first machine-learned model, the user query to determine whether the user query is associated with a product or a service; and in response to the determination that the user query is associated with a product or service, generating the proxy phrase. The final answer does not include a link to a product or service when determining that the user query is not associated with a product or service. The obtaining of the first content item is performed in parallel to generating an answer to the user query. The method further may include: processing, using an ai search assistant, the user query to generate an approximate answer; and calculating the ranking score based on a similarity between the first proxy phrase and the approximate answer. Implementations of the described techniques may include hardware, a method or process, or computer software on a computer-accessible medium.

One general aspect includes a computer-implemented method for generating a final answer to a first query. The computer - implemented method also includes obtaining a user query, the user query being associated with a first category; processing, using the first machine-learned model, the user query to generate a plurality of subqueries, the plurality of subqueries being associated with subcategories of the first category; generating a plurality of search results based on the plurality subqueries; processing, using the first machine-learned model, the plurality of search results to generate a first proxy phrase; calculate, using the first machine-learned model and based on the plurality of search results, a ranking score for the first proxy phrase; and obtaining, from a content server and based on the ranking score, a first content item associated with the first proxy phrase. Other embodiments of this aspect include corresponding computer systems, apparatus, and computer programs recorded on one or more computer storage devices, each configured to perform the actions of the methods.

One general aspect includes one or more non-transitory computer-readable media that collectively instructs that. The one or more non - transitory computer - readable media also includes obtaining a user query, the user query being associated with a first category. The media also includes processing, using the first machine-learned model, the user query to generate a plurality of subqueries, the plurality of subqueries being associated with subcategories of the first category. The media also includes generating a plurality of search results based on the plurality subqueries. The media also includes processing, using the first machine-learned model, the plurality of search results to generate a first proxy phrase. The media also calculates, using the first machine-learned model and based on the plurality of search results, a ranking score for the first proxy phrase. The media also includes information obtained from a content server and based on the ranking score, a first content item associated with the first proxy phrase. Other embodiments of this aspect include corresponding computer systems, apparatus, and computer programs recorded on one or more computer storage devices, each configured to perform the actions of the methods.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
Figure 1 depicts a block diagram of an example machine-learned content generation system according to example embodiments of the present disclosure.
Figure 2 depicts a flow diagram of an example process for generating a proxy phrase based on a user query according to example embodiments of the present disclosure.
Figure 3 depicts a flow diagram of an example process for generating an AI-generated content according to example embodiments of the present disclosure.
Figure 4 depicts a flow diagram of an example process for generating a proxy phrase based on a user query according to example embodiments of the present disclosure.
Figure 5 depicts a graphical user interface of an example AI-generated content according to example embodiments of the present disclosure.
Figure 6 is a flow chart diagram illustrating an example method for training a machine-learned model according to example implementations of aspects of the present disclosure;
Figure 7 is a block diagram of an example processing flow for using machine-learned model(s) to process input(s) to generate output(s) according to example implementations of aspects of the present disclosure;
Figure 8 is a block diagram of an example sequence processing model according to example implementations of aspects of the present disclosure;
Figure 9 is a block diagram of an example technique for populating an example input sequence for processing by a sequence processing model according to example implementations of aspects of the present disclosure;
Figure 10 is a block diagram of an example model development platform according to example implementations of aspects of the present disclosure;

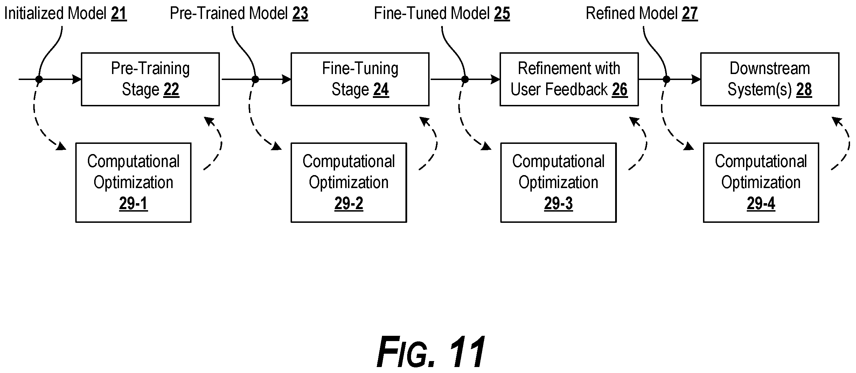

Figure 11 is a block diagram of an example training workflow for training a machine-learned model according to example implementations of aspects of the present disclosure;

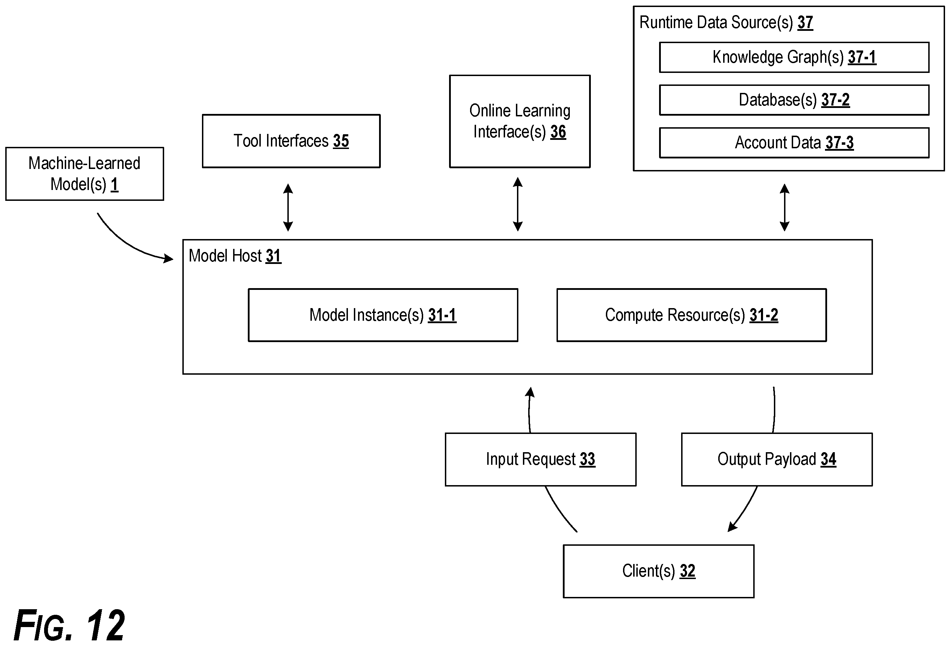

Figure 12 is a block diagram of an inference system for operating one or more machine-learned model(s) to perform inference according to example implementations of aspects of the present disclosure;
Figure 13 is a block diagram of an example networked computing system according to example implementations of aspects of the present disclosure;
Figure 14 is a block diagram of an example computing device according to example implementations of aspects of the present disclosure; and
Figure 15 is a block diagram of an example computing device according to example implementations of aspects of the present disclosure.

Reference numerals that are repeated across plural figures are intended to identify the same features in various implementations.

### DETAILED DESCRIPTION

Generally, the present disclosure is directed to automatically generating content items that are specifically tailored to a user based on a user query and/or an AI search answer that can influence a user's journey state. The system enables a personalized experience that leverages a range of signals (e.g., contextual information, user information, previous search context, location, preferences) with an improved user interface that includes embedded content items within an answer to a query. Additionally, the system can improve performance of interacting with the content items by generating an answer to a query that is easy to navigate with an intuitive design of having content items embedded in the AI-generated answers.

Additionally, the system described herein utilizes an AI-based search assistant that can integrate content items into AI-generated text responses. The system can include a first machine-learned model to translate a preliminary response to a user query into a proxy phrase (e.g., content-relevant keywords). Moreover, the system includes a second machine-learned model to convert a content item into text and embed the text seamlessly into the answer to the query. By using a proxy phrase to retrieve the content item instead of the preliminary answer, the system can retrieve relevant content items to maintain content item relevance. By using a second machine learned model to convert the content item into text and then embed the text in the answer, the system can reduce ad blindness (e.g., website visitors consciously or unconsciously ignore content item and other elements that resemble sponsored content) and improve the native integration by seamlessly blending sponsored content with the surrounding content to make it appear organic and less intrusive to users). Furthermore, techniques like instruction tuning and parallel processing are used to optimize latency. The system also includes filters for brand safety and consistency checks to ensure natural sponsored content placement.

As used throughout this specification, the phrase "proxy phrase" refers to one or more machine-generated words that collectively represent the intent of an input phrase. In many cases, the proxy phrase for a given input phrase will differ from the given input phrase. For example, the proxy phrase can omit words that were present in the given input phrase. Words of the proxy phrase that appear in the input phrase can be in a different order than how they appeared in the given input phrase. For example, assume that the input phrase is "leather pants men fashion nova." In this example, the proxy phrase can be "men's leather pants fashion nova" because this is a more common way to represent the intent of the input phrase. The proxy phrases discussed throughout this document are generated using AI (e.g., a language model), but proxy phrases can be generated by other machines or computing devices. Generally, a proxy phrase is stored in a database with a mapping to the input phrase used to generate the proxy phrase. Multiple mappings of proxy phrases to corresponding input phrases can be stored together to create an intent lexicon. The proxy phrase can include a plurality of keywords (e.g., less than six keywords) that capture user intent associated with a user query. The proxy phrase can be a granular representation of the user intent that is privacy safe.

As background, a traditional search system traditionally targets a keyword of a user query to determine which sponsored content item to present. For instance, content providers provide keywords (e.g., "hotel in San Francisco") and a user provides a user query (e.g., "vacation in San Francisco") and the search system determines whether a keyword and query match. When a keyword and query match, the search system can return a number of relevant content items that can be presented on a search engine page result.

According to some embodiments described herein, a search system can include an AI-based search assistant that uses AI to help users find information more effectively than traditional search engines. For instance, instead of just returning a list of links based on keywords, an AI search assistant can understand natural language, summarize information, provide personalized results, interact in a dialogue, and automate tasks for a user. For example, the AI-based search assistant can receive a conversational question for a user, and the AI-based search assistant can understand the context of the question and the intent of the user. Additionally, the AI-based search assistant can generate long-form content (e.g., a summary, an explanation) by analyzing multiple sources of information instead of just listing relevant websites. Moreover, the AI-based search assistant can tailor answers based on preferences of a user, past behavior of the user, or specific tasks requested by the user. Furthermore, the AI-based search assistant can receive follow-up questions (e.g., instructions) and modify an answer based on the follow-up question. In some instances, the AI-based search assistant can automate tasks, such as booking appointments, writing emails, order products, and so on.

AI-based search assistants can compose long-form content (e.g., summary, explanation, article) based on search results from the internet or other sources. The AI-based search assistant can generate long-form content by finding direct answers to research questions instead of merely showing links to pages which may contain the answers or parts of an answer. The long-form content, however, can pose a problem for selecting sponsored content items to present alongside the answer. In a traditional search query, the keyword matching process is based on a few keywords. One of the challenges with AI-based search assistants includes matching a content item with an AI generated summary. The system described herein can obtain relevant sponsored content to a user query by using double translation, where a first machine-learned model machine-learned model translates long text into query-like keywords for sponsored content matching.

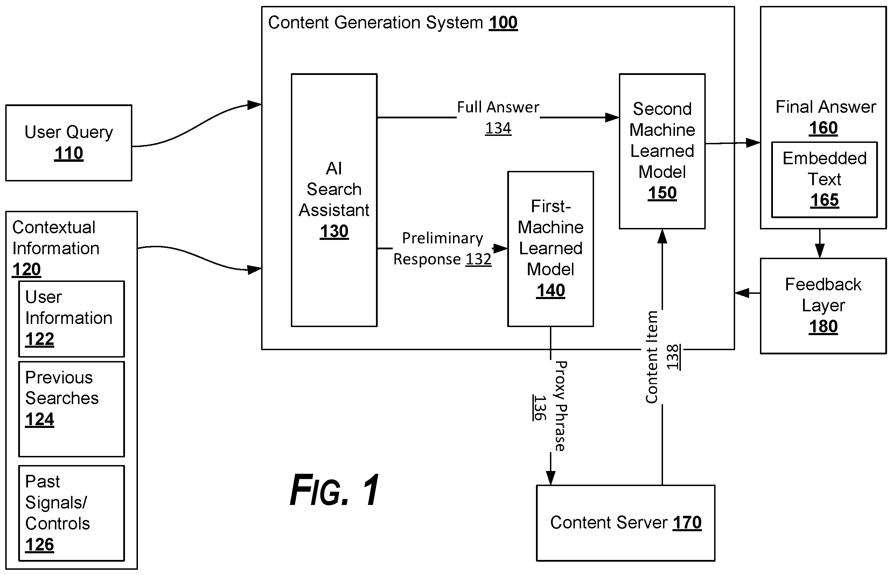

By using AI techniques described herein, the system can select and provide relevant content items to a user query by using a first machine-learned model as described in figure 1. For example, the system can determine that there are commercially relevant products or services as part of its answer. The system can determine commercial intent of a user query based on a score associated with the generation of the proxy phrases. For example, when the score is below a threshold, then the system bypasses opening a content item from the content server and presents an answer without embedding a word associated with a content item. In conventional systems, the user query may be long and complex, making it difficult to process for query-focused conventional systems. To enable existing search systems to be used natively in an AI-based Search Assistant, the system includes a first machine-learned model to generate a proxy phrase based on long-form content (e.g., an AI-generated summary, a paragraph, a preliminary response, a full answer). The first model (i.e., first machine-learned model) can provide a translation of a text (e.g., a paragraph from an AI answer) into a set of search queries to be used for ads retrieval process.

Moreover, in a conventional AI-based search result, sponsored content items can stand out as non-native. For instance, the sponsored content can break the flow of reading. For example, this can be akin to displaying sponsored content items in the middle of an article. Over time, users can learn to ignore the sponsored content, which results in ad blindness and leads to low interaction rates and limited effectiveness (e.g., click-through rates, conversions). Ad blindness results when a user consciously or subconsciously ignores content items on web pages or apps, especially when the content item looks like typical sponsored content. For example, users can scroll past sponsored content items without looking at them. Additionally, users can recognize typical sponsored content placements (e.g., top, sidebar, popup) and automatically tune them out. Moreover, even when visible, a user may cognitively filter the sponsored content out as non-meaningful content.

According to some embodiments, the system can integrate sponsored content natively in an AI-generated answer by using a second machine-learned model as described in figure 1. For instance, the integration can be similar to a sponsored content being natively integrated in a magazine, newspaper, or "a call from our sponsor" in a radio show and podcast. The techniques described herein can utilize a repository of non-native content items (e.g., text ads, shopping ads) and natively integrate them in AI-generated search answers. The second machine-learned model can provide a translation of a content item into text that fits natively into the AI answer. For example, the content item is associated with a first word in an answer, and the second machine-learned model can update the answer so that the first word now includes an embedded link associated with the content item.

In a conventional search engine response page, the content items integrate natively. Additionally, the system described herein can integrate the content item natively in the answer by matching the form, function, and/or style of the platform or answer to make the content item feel more like a natural part of the user experience. The system can present the content item as one of many links or as clickable images which operate similar to native page elements (e.g., images, maps).

The AI search assistant can initially generate a preliminary response and then a full answer to the query. The preliminary response and/or the full answer can include a summary and/or an explanation. The preliminary response and/or the full answer can be long-form content (e.g., long-form text answer). The long-form text answer can be a detailed, comprehensive response to a question or topic. Unlike a short answer, which might be a sentence or two, a long-form format answer typically includes an explanation and context. The long-form text answer can include examples and/or evidence. Additionally, the long-form text answer can include a clear structure (e.g., introduction, body, conclusion). In some instances, the long-form text answer can include multiple perspectives or in-depth analysis.

The content item retrieval, translation of the content item to text, and generation of a full answer to a query can be processed in a latency-optimized streaming fashion so that users do not have to wait for the answers to the queries. For instance, the AI search assistant can generate a preliminary response to a query that is processed by the first machine-learned model to generate a proxy phase. The proxy phase can be sent to a content server to obtain a content item. The content item can be processed by the second machine-learned model to generate text. The generated text can include a link to a landing page. The text can include a link to a landing page of an entity. Additionally, the system can, in a parallel or asynchronous process, generate a full answer to the query. For example, the full answer can be based on the preliminary response. The final answer to the query that is presented to a user can be generated by embedding the generated text with the full answer. The generated text can be associated with the content item.

According to some embodiments, the system can receive a preliminary response to a query and asynchronously translates, using the first machine-learned model, the response into a proxy phrase that can be processed by a content server to select relevant content items. For instance, a content server may select irrelevant content items when the selection is based on AI-generated summaries. Thus, the system includes a double translation process to generate an AI-generated summary from a user query and then generate a proxy phrase from the AI-generated summary. Subsequently, the proxy phrase, and not the AI-generated summary, can be sent to the content server to select a content item to present along with the answer to the query. The content server (e.g., ad backend server) can return content items (e.g., text content, image content, video content, audio content) that can be translated into native format using the second machine-learned model. Subsequently, the system integrates the native format in the full answer to generate a final answer to be presented to a user.

The process can be optimized to ensure that there is a low latency for the content items to be natively integrated into the answers to the queries. To reduce latency, the ads system receives parts of AI-based Search response and asynchronously translates them into queries that the ads backend can understand by using the first machine-learned model. The ads backend server can return text ads which get translated into native format using the second machine-learned model.

Additionally, the system provides seamless content item presentation to enable native sponsored content integration in AI-based search experiences. The system ensures native sponsored content item integration to reduce banner blindness, such as when a user becomes conditioned to ignore a content item due to a lack of relevance or quality. The system includes a second machine-learned model that translates ads into native text formats. Moreover, the system includes filters to ensure ad relevance and avoid inappropriate content. In some instances, the system can include extensions of the content item integration system. The system can be extended to other modalities like video and image ads. The second machine learned model can be utilized for product placement automation in videos and other content.

Moreover, the system includes safeguards, such as filters, to prevent hallucinations. For example, the first machine-learned model may misinterpret input data in a way that leads to incorrect keywords to be sent to the content server. In order to reduce hallucination, there is a need to reduce misinterpretation of input data in order to mitigate undesired outputs. For example, if the system hallucinates or generates incorrect information, users may lose trust in a system that produces unreliable or unexpected outputs. Trust is essential for the widespread adoption of AI technology, and hallucinations can undermine confidence in the technology. Furthermore, unreliable results can make the user experience less user centric.

The technical challenges of integrating ads into AI-based search assistants include a first machine-learned model for double translation and a second machine-learned model for maintaining ad relevance. In this invention, the concept of double translation is introduced, where the first machine-learned translates long-form content (e.g., AI-generated preliminary response, AI-generated answer) into query-like keywords for sponsored content matching. The second machine-learned model can reduce ad blindness and ensure native ad integration. The second machine-learned model can translate ads into native text formats. Additionally, filters can ensure ad relevance and avoid inappropriate content.

The system minimizes latency by including parallel processing and early integration of sponsored content items. This enables a better user experience by preventing slowdowns in the generation of the answers with the embedded sponsored content. Additionally, the models are tuned to optimize the content item integration process and keyword generation process.

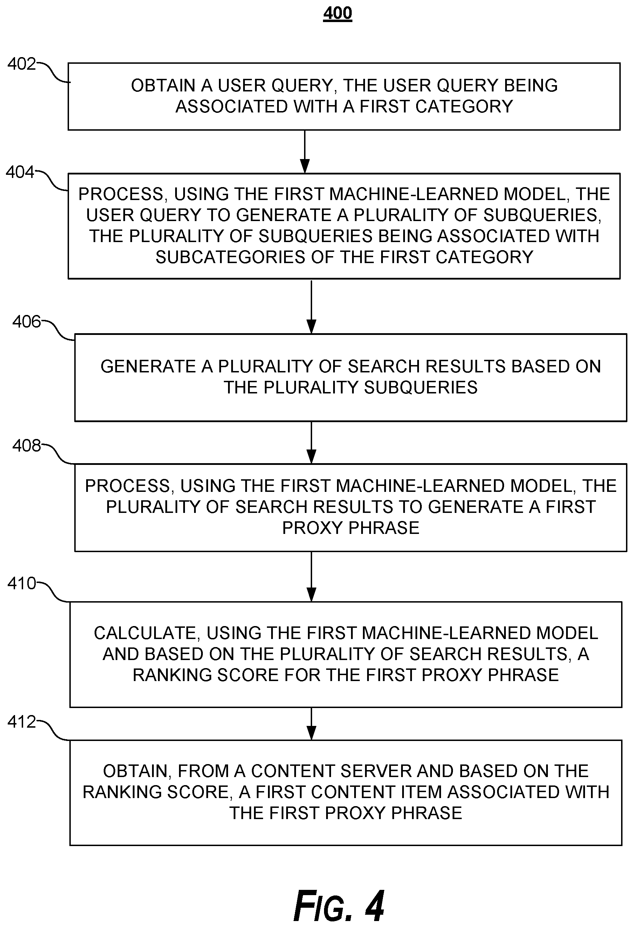

By enabling the integration of sponsored content directly in the AI-generated text responses, it enables better user experiences. For example, when a user asks for a recipe for a healthy vegetable juice, as later described in figure 4, the AI-generated answer can include a shopping link with all of the ingredients needed to be purchased to make the juice.

Examples of the disclosure provide several technical effects, benefits, and/or improvements in computing technology and AI techniques that involve the use of machine learning algorithms to improve user experience. The techniques described herein improve the use of generative models by reducing the hallucination of the generated content. For example, by using the user query and previous search requests, the model can determine content specifically tailored to the user. Previous search requests can be search requests associated with a user account of the user that were previously inputted into the search engine and/or content generation system. The machine-learned models described herein perform a transfer of knowledge by using the search queries which can result in more relevant content items and reduction of hallucination for the embedded content in the answer. Additionally, by using more content-relevant data, the system improves the performance of generative models. Moreover, the system utilizes better training techniques by developing more efficient and effective training techniques that are specific to the user account (e.g., based on user search) to reduce the time and resources required to train models. Furthermore, the system can incorporate user feedback and provide the feedback, via reinforcement learning or active learning, to generative models that can help the models learn from user preferences and improve over time. The present disclosure can reduce processing by reducing the number of manual inputs provided by a user and by reducing the number of interface screens which must be obtained, loaded, interacted with, and updated. For example, the system can automatically create a communication campaign with minimum user interaction by ranking and selecting media assets based on their determined performance value.

With reference now to the Figures, example embodiments of the present disclosure will be discussed in further detail.

Figure 1 depicts a block diagram of an example content generation system 100 according to example embodiments of the present disclosure. The content generation system 100 can include an AI search assistant 130, a first machine-learned model 140, and a second machine-learned model 150. The AI search assistant 130 can generate a preliminary response 132 and subsequently a full response 134. The preliminary response 132 can be processed by the first machine-learned model 140 to generate a proxy phrase 136. As used herein, the preliminary response 132 can also be referred to as an approximate answer, representing an initial, partial, or best-guess response generated by the AI search assistant prior to the full answer. The proxy phrase 136 can be transmitted, by the content generation system 100, to a content server 170. Subsequently, the content generation system 100 can obtain a content item 138 from the content server. The second machine-learned model 150 can process the content item 138 and a full answer 134 to generate a final answer 160. The final answer 160 can include embedded text 165. The embedded text 165 can be generated by the second machine-learned model 150 by processing the content item 170. In some instances, the final answer can include an embedded image or video that is generated by the second machine-learned model 150 by processing the content item 170.

As previously described, the AI search assistant 130 can first generate a preliminary response 132 to a user query 110 and then generate a full answer 134 to the user query 110. In one example, the preliminary response 132 can be an answer that was previously generated and stored by the AI search assistant 130 to another query that is related to the user query 110. In another example, the preliminary response 132 can be a partial answer that is generated in real-time by the AI search assistant 130 to the user query 110. The partial answer is then further processed by the AI search assistant 130 to generate the full answer 134. In yet another example, the preliminary response 132 can be a first section of the full answer 134 that is generated in real-time by the AI search assistant 130 to the user query 110. The first section (e.g., first paragraph) can then be combined, by the AI search assistant 130, with additional sections (e.g., second section, third section) generating the full answer 134.

Additionally, the content generation system 100 can obtain contextual information 120. The contextual information 120 can be associated with the user query 110 and/or a user account. The contextual information 120 can include user information 122 associated with a user account of the content generation system 100. The contextual information 120 can also include previous searches 124 for users, such as previous user queries. For example, the preliminary response can be generated based on answers to previous searches by other users. Moreover, the contextual information 120 can include past signals and/or controls 126 input to the content generation system 100. The content generation system 100 can process the user query 110 and the contextual information 120 to generate the final answer 160.

In some instances, the content generation system 100 can include feedback layer 180. The feedback layer 140 can facilitate input of user feedback on embedded text 165 in a final answer 160. For example, one or more parameters of the AI search assistant 130, the first machine-learned model 140, and/or second machine-learned model 150 can be modified based on the user feedback.

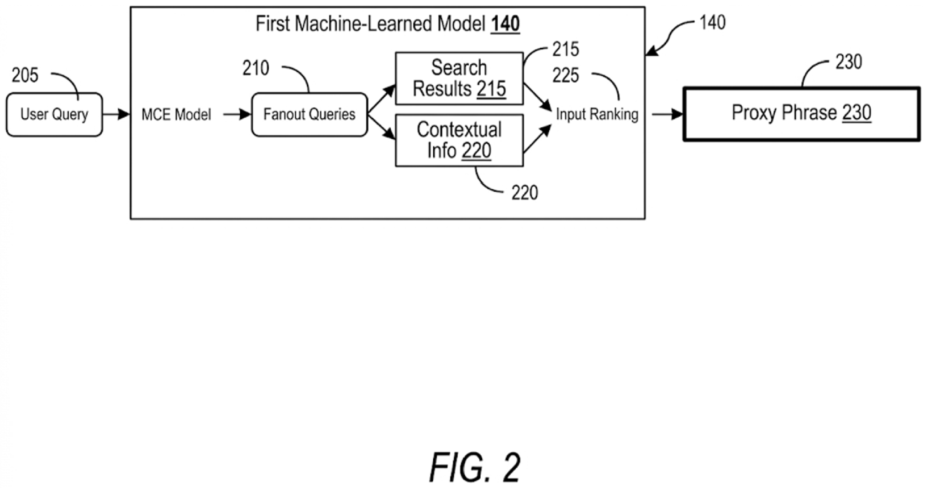

Figure 2 depicts a flow diagram of an example process 200 for generating a proxy phrase based on a user query according to example embodiments of the present disclosure.

At 205, a first machine-learned model can obtain a user query from a user. For example, the user query can be how many tennis balls can fit in a trunk of a vehicle that is a specific model of a first manufacturer.

At 210, the first machine-learned model can generate a plurality of fanout queries based on the user query. Continuing with the example, the plurality of fanout queries can be: "what is the size of a tennis ball" and "what are the dimensions of the trunk of the specific model of the first manufacturer".

At 215, the first machine-learned model can generate a plurality of search results associated with the plurality of fanout queries.

At 220, the first machine-learned model can obtain contextual information associated with the user queries. For instance, the contextual information can be the contextual information 120 that was previously discussed in figure 1.

At 225, the first machine-learned model can generate an input ranking based on the search results and the contextual information.

At 230, the first machine-learned model can generate a proxy phrase based on the search results, the contextual information, and the input ranking.

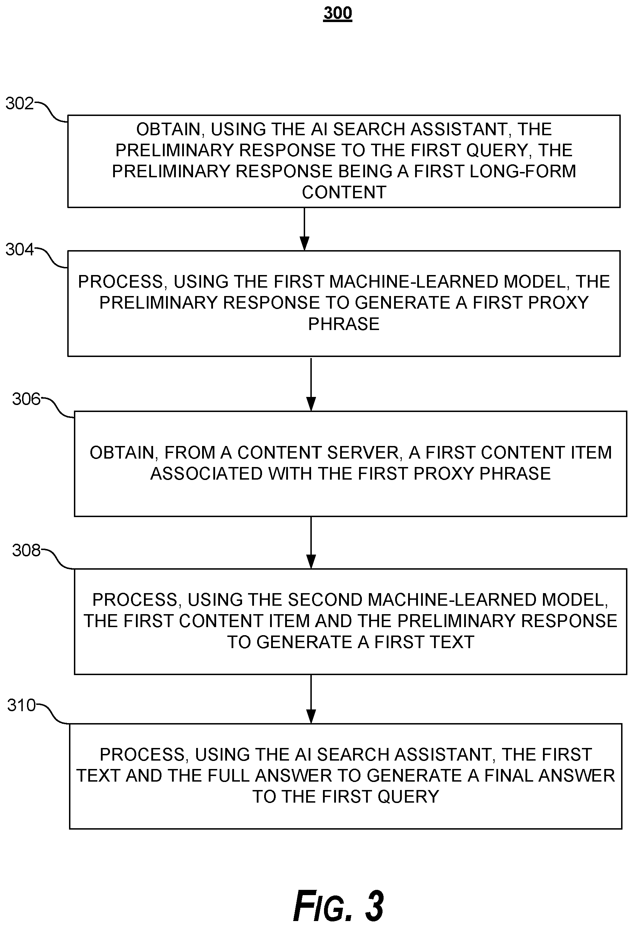

Figure 3 depicts a flow diagram of an example method 300 for presenting AI-generated content with embedded link that is associated with a content item in accordance with some embodiments of the present disclosure. The method 300 can be performed by processing logic that can include hardware (e.g., processing device, circuitry, dedicated logic, programmable logic, microcode, hardware of a device, integrated circuit, etc.), software (e.g., instructions run or executed on a processing device), or a combination thereof. In some embodiments, method 300 is performed by a server computing system (e.g., server computing system 60) or client computing system (e.g., computing devices 50). Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processors can be omitted in various embodiments. Thus, not all processes are required in every embodiment. Other process flows are possible.

In some instances, the computing system can include an AI search assistant, a first machine-learned model, and a second machine-learned model. The AI search assistant can be configured to generate a preliminary response and a full answer to a first query. Additionally, the first machine-learned model can be configured to generate a proxy phrase based on long-form content. Moreover, the second machine-learned model can be configured to generate text based on a content item.

In some instances, the system can receive, using the AI search assistant, the user query from a user device associated with a user account.

At 302, the system (e.g., server computing system 60, computing devices 50) can obtain, using the AI search assistant, the preliminary response to the first query. The preliminary response can be a first long-form content. The long-form content can include an explanation and context. The long-form content can include examples and/or evidence. Additionally, the long-form content can include a clear structure (e.g., introduction, body, conclusion). In some instances, the long-form content can include multiple perspectives or in-depth analysis.

In some instances, the system can process, using the AI search assistant, the first query to generate the preliminary response, wherein the preliminary response is derived from a previously generated answer to a query that is similar to the first query.

In some instances, the system can process, using the AI search assistant, the first query to generate the preliminary response, wherein the preliminary response is a best-guess answer to the first query.

In some instances, the system can process, using the AI search assistant, the first query to generate the preliminary response, wherein the preliminary response is a summary of key points associated with the first query.

At 304, the system can process, using the first machine-learned model, the preliminary response to generate a first proxy phrase. As used throughout this specification, the phrase "proxy phrase" refers to one or more machine-generated words that collectively represent the intent of an input phrase. In many cases, the proxy phrase for a given input phrase will differ from the given input phrase. For example, the proxy phrase can omit words that were present in the given input phrase. Words of the proxy phrase that appear in the input phrase can be in a different order than how they appeared in the given input phrase. For example, assume that the input phrase is "leather pants men fashion nova." In this example, the proxy phrase can be "men's leather pants fashion nova" because this is a more common way to represent the intent of the input phrase. The proxy phrases discussed throughout this document are generated using AI (e.g., a language model), but proxy phrases can be generated by other machines or computing devices. Generally, a proxy phrase is stored in a database with a mapping to the input phrase used to generate the proxy phrase. Multiple mappings of proxy phrases to corresponding input phrases can be stored together to create an intent lexicon.

In some instances, the system can process, using the first machine-learned model, the preliminary response to determine that the final answer is associated with a product or a service. Additionally, in response to the determination that the final answer is associated with a product or service, the system can generate the proxy phrase.

In some instances, the system can process, using the first machine-learned model, the preliminary response to determine that the final answer is not associated with a product or a service. Additionally, the final answer may not include a link to a product or service when determined that the final answer is not associated with a product or service.

At 306, the system can obtain, from a content server, a first content item associated with the first proxy phrase.

In some instances, the obtaining of the first content item can be performed in parallel with generating the full answer or final answer to the first query.

At 308, the system can process, using the second machine-learned model, the first content item and the preliminary response to generate a first text.

In some instances, the system can retrieve, using the AI search assistant, external data associated with the first query. Additionally, the system can process, using the AI search assistant, the external data, the preliminary response, and the first query to generate the full answer. Additionally, the external data can be based on a search engine result page. Moreover, the external data can be retrieved from a third-party database.

In some instances, the system can determine, using the second machine-learned model, contextual information associated with the first query, the contextual information including a tone associated with the full answer. Additionally, the system can process, using the second machine-learned model, the contextual information and the first content item to generate the first text. Moreover, the system can insert the first text in the full answer to generate the final answer. Furthermore, the first text can include a link to a webpage of an entity associated with the first content item.

In some instances, the system can process, using the second machine-learned model, the full answer and the first content item to determine a position to insert the first text in the final answer. Additionally, the system can insert the first text at the determined position of the full answer to generate the final answer.

In some instances, the system can process, using the second machine-learned model, the first content item and the preliminary response to generate a first text, the first text being derived from the first content item. Additionally, the system can insert the first text in the full answer to generate the final answer. In some examples, the first content item can be an image or a video that the second machine-leaned model converts to the first text.

In some instances, the system can process, using the second machine-learned model, the first content item and the preliminary response to generate a first image, the first image being derived from the first content item. For example, the second machine-learned model can generate an image or a video using the first content item. Additionally, the system can insert the first image in the full answer to generate the final answer.

At 310, the system can process, using the AI search assistant, the first text and the full answer to generate a final answer to the first query.

In some instances, the system can obtain user information and contextual information associated with the first query, the contextual information including a previous query. Additionally, the system can process, using the AI search assistant, the user information, the contextual information, the preliminary response, and the first query to generate the full answer.

Additionally, the system can cause, using the AI search assistant, a presentation of the final answer on a display of the user device.

Figure 4 depicts a flow diagram of an example method 400 for generating a proxy phrase based on user query in accordance with some embodiments of the present disclosure. The method 400 can be performed by processing logic that can include hardware (e.g., processing device, circuitry, dedicated logic, programmable logic, microcode, hardware of a device, integrated circuit, etc.), software (e.g., instructions run or executed on a processing device), or a combination thereof. In some embodiments, method 400 is performed by a server computing system (e.g., server computing system 60) or client computing system (e.g., computing devices 50). Although shown in a particular sequence or order, unless otherwise specified, the order of the processes can be modified. Thus, the illustrated embodiments should be understood only as examples, and the illustrated processes can be performed in a different order, and some processes can be performed in parallel. Additionally, one or more processors can be omitted in various embodiments. Thus, not all processes are required in every embodiment. Other process flows are possible.

Figure 4 illustrates an example method 400 for generating a proxy phrase based on a user query. The method 400 begins at block 410, where the system obtains a user query from a user device, wherein the user query is associated with a broad first category representing the overall intent of the user. At block 420, the system processes the user query using a first machine-learned model to generate a plurality of subqueries. These subqueries are associated with subcategories of the first category and represent narrower, distinct facets of the user's overarching inquiry. Next, at block 430, the system generates a plurality of search results based on the plurality of subqueries. At block 440, the first machine-learned model processes the plurality of search results to generate a first proxy phrase, which serves as a highly targeted, query-like representation of the user's intent. To ensure the quality and relevance of this translation, the system calculates a ranking score for the first proxy phrase at block 450 using the first machine-learned model and based on the plurality of search results. Finally, at block 460, the system obtains a first content item associated with the first proxy phrase from a content server, based on the calculated ranking score. This first content item can subsequently be natively embedded within an AI-generated answer provided to the user.

In some instances, the computing system can include an AI search assistant, a first machine-learned model, and a second machine-learned model. The AI search assistant can be configured to generate an answer to a first query. Additionally, the first machine-learned model can be configured to generate a proxy phrase based on long-form content. Moreover, the second machine-learned model can be configured to generate text based on a content item, the text being embedded in the generated answer.

As used herein, the term "first category" refers to a high-level classification, topic, or overarching intent domain associated with a user query. A first category can represent a broad domain of information, such as automotive, food and beverage, apparel, electronics, commercial products, services, or general informational queries. The term "subcategories" refers to narrower, more specific classifications, facets, or components that fall within or relate to the first category. The subcategories represent individual elements of knowledge or distinct intents that collectively address the broader user query.

By way of example and not limitation, if the system receives a user query asking, "how many tennis balls can fit in a trunk of a vehicle that is a specific model of a first manufacturer," the system can process the user query to determine it is associated with a first category of "Automotive Specifications" or "Vehicle Storage." The first machine-learned model can then generate a plurality of subqueries associated with subcategories of this first category. For instance, a first subquery (e.g., "what is the size of a tennis ball") can be associated with a subcategory of "Sporting Goods Dimensions," and a second subquery (e.g., "what are the dimensions of the trunk") can be associated with a subcategory of "Vehicle Dimensions."

In another example, a user query requesting a "recipe for a healthy vegetable juice" can be associated with a first category of "Food and Beverage." The first machine-learned model can generate subqueries corresponding to subcategories such as "Ingredients" (e.g., best vegetables for juicing), "Nutritional Information" (e.g., health benefits of vegetable juice), and "Grocery Shopping" (e.g., where to purchase the ingredients). This categorization allows the system to comprehensively understand complex queries, generate highly relevant proxy phrases, and accurately retrieve targeted content items.

At block 410, the system can obtain a user query, the user query being associated with a first category.

At block 420, the system can process, using the first machine-learned model, the user query to generate a plurality of subqueries. The plurality of subqueries being associated with subcategories of the first category.

At block 430, the system can generate a plurality of search results based on the plurality subqueries.

At block 440, the system can process, using the first machine-learned model, the plurality of search results to generate a first proxy phrase.

At block 450, the system can calculate, using the first machine-learned model and based on the plurality of search results, a ranking score for the first proxy phrase. It should be noted that the system can generate different types of rankings or scores during the content generation process. For example, the first machine-learned model can generate an 'input ranking' that evaluates and ranks the relevance of the underlying search results and contextual information prior to, or during, the generation of the proxy phrase. Conversely, the system can calculate a 'ranking score' for the generated proxy phrase itself. The ranking score evaluates the quality, relevance, or commercial intent of the generated proxy phrase based on the plurality of search results and/or its similarity to an approximate answer. The system can then use this ranking score to determine whether to retrieve a content item from the content server.

At 460, the system can obtain from a content server and based on the ranking score, a first content item associated with the first proxy phrase.

In some implementations, the system can utilize multiple models to refine the selection of the proxy phrase. For example, the operations can further include processing, using a second machine-learned model, the plurality of search results to generate a summarized version of the plurality of search results. Because search results can contain a vast amount of unstructured data, the second machine-learned model can distill this data into a concise summary that captures the core intent or primary commercial themes of the results. Subsequently, the system can update the ranking score, using the first machine-learned model, based on the summarized version of the plurality of search results. By updating the ranking score using this summarized version, the first machine-learned model can more accurately evaluate whether the generated proxy phrase aligns with the dominant context of the user's inquiry, thereby improving the relevance of the content item ultimately retrieved from the content server.

By way of a real-world example of the method 400, suppose a user submits a user query asking, 'How do I start a podcast for my small business?' (Block 410). The system determines this query is associated with a first category of 'Audio Production.' At Block 420, the first machine-learned model processes this query and generates subqueries associated with subcategories of Audio Production, such as: 'best budget podcast microphones' (Subcategory: Hardware) and 'podcast editing software for beginners' (Subcategory: Software). At Block 430, the system generates search results for these subqueries, retrieving articles and reviews about specific microphones (e.g., USB microphones, starter kits) and audio editing programs. At Block 440, rather than sending the user's broad, initial informational query to an ad server, the first machine-learned model processes these specific search results to generate a highly targeted first proxy phrase, such as 'beginner podcast microphone bundle.' At Block 450, the system calculates a ranking score for this proxy phrase. Because the underlying search results strongly indicate a commercial intent to purchase hardware, the system calculates a high ranking score (e.g., 0.92) for the proxy phrase. Finally, at Block 460, based on this high ranking score, the system sends the proxy phrase 'beginner podcast microphone bundle' to the content server and obtains a relevant first content item (e.g., a sponsored link to purchase a specific podcasting starter kit). This allows the AI search assistant to natively embed a highly relevant, shoppable link directly into its long-form instructional answer on how to start a podcast.

In some instances, the system further comprises an AI search assistant configured to generate an answer to the user query, the operations further comprising causing a presentation of the first content item with the answer on a display of a user device.

In some instances, the obtaining of the first content item is performed in parallel with the AI search assistant generating an answer to the user query.

In some instances, the system can process, using the AI search assistant, the user query to generate an approximate answer. Additionally, the system can calculate the ranking score based on a similarity between the first proxy phrase and the approximate answer. As used herein, the preliminary response (e.g., preliminary response 132) can also be referred to as, or take the form of, an approximate answer. An approximate answer represents an initial, partial, or best-guess response generated by the AI search assistant prior to the generation of the full or final answer. In some implementations, the system processes the user query using the AI search assistant to generate this approximate answer, and subsequently calculates a ranking score based on a similarity between the generated proxy phrase and the approximate answer. This ensures that the selected proxy phrase accurately reflects the contextual intent of the AI-generated response.

In some instances, the first proxy phrase includes a plurality of words that are similar to words in the approximate answer.

In some instances, the first content item is not retrieved from a content server when the ranking score is below a threshold value. For instance, the ranking score is below a threshold value when the user query is a non-commercial query.

In some instances, the system can obtain a search result for each of the subcategories of the first category to generate the plurality of search results. Additionally, the system can generate a plurality of keywords based on an analysis of the plurality of search results.

In some instances, the plurality of keywords is based on a summary of key points associated with the search result for each of the subcategories of the first category.

In some instances, the system can calculate the ranking score for the first proxy phrase based on the plurality of keywords.

In some instances, the system can process, using the first machine-learned model, the plurality of search results to generate a second proxy phrase when the ranking score exceeds a threshold value. Additionally, the first content item is also based on the second proxy phrase. In some implementations, the first machine-learned model can process the plurality of search results to generate a second proxy phrase. For example, a second proxy phrase can be generated when the ranking score for the first proxy phrase exceeds a threshold value, which may indicate a high commercial intent or a high confidence in the relevance of the search results. By generating a second proxy phrase, the system can obtain a wider variety of content items (e.g., a second content item associated with the second proxy phrase) from the content server. This allows the system to natively embed multiple, highly relevant content items within different sections of a long-form final answer.

In some instances, the system can obtain, from a content server, a second content item associated with the second proxy phrase.

In some instances, the first machine-learned model is trained using a plurality of LLMs.

In some instances, the system can obtain user information and contextual information associated with the user query, the contextual information including a previous query. Additionally, the system can process, using the first machine-learned model, the user information, the contextual information, the plurality of search results to generate the first proxy phrase.

In some instances, the system can process, using the first machine-learned model, the user query to determine whether the user query is associated with a product or a service. Additionally, in response to the determination that the user query is associated with a product or service, the system can generate the proxy phrase.

In some instances, the system can process, using the first machine-learned model, the user query to determine whether user query is associated with a product or a service, where the final answer does not include a link to a product or service when determined that the user query is not associated with a product or service.

In some embodiments, the first machine-learned model is trained using a plurality of LLMs. This training technique can involve using an ensemble of different LLMs to generate diverse synthetic training data that covers a wide array of user queries and proxy phrase mappings. Alternatively, or additionally, training can utilize a mixture-of-experts architecture or distillation techniques, where multiple 'teacher' LLMs-each potentially specialized in different data categories (e.g., commercial queries, informational queries, specific industries)-distill their knowledge into the first machine-learned model. This improves the model's accuracy, robustness, and efficiency in generating proxy phrases across various domains.

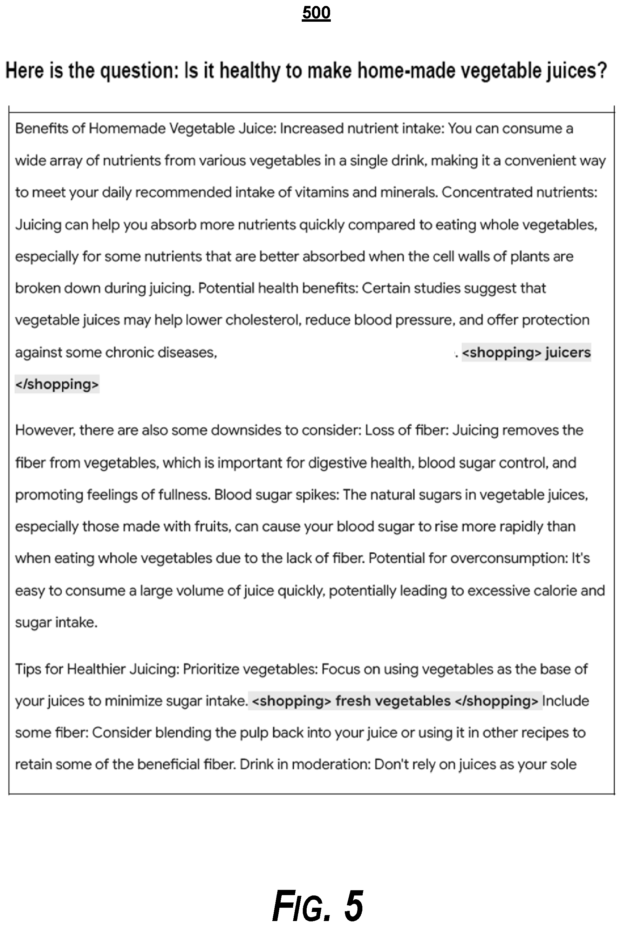

Figure 5 depicts a graphical user interface 500 of an example AI-generated content according to example embodiments of the present disclosure. In this example, a question 510 can be asked to the AI search assistant. In response to the user query, the system can generate an answer with embedded links.

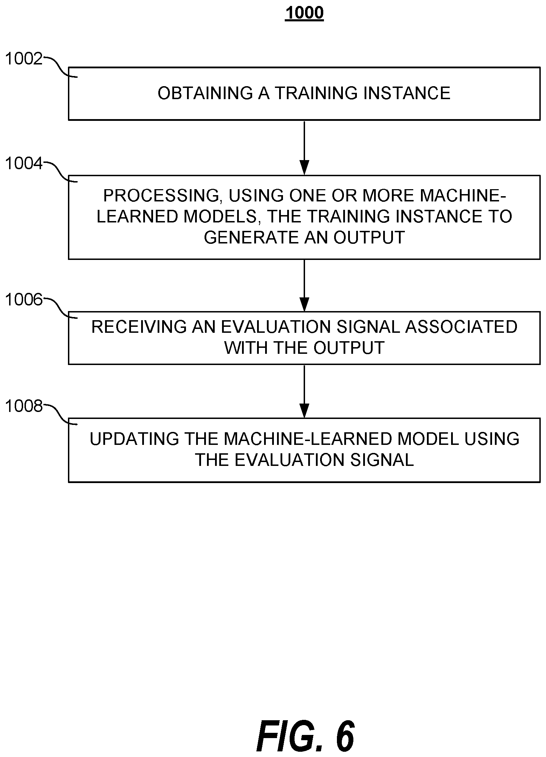

Figure 6 depicts a flowchart of a method 1000 for training one or more machine-learned models according to aspects of the present disclosure. For instance, an example machine-learned model can include machine-learned media asset generation pipeline, machine-learned content item generation pipeline, a machine-learned text generator, a machine-learned image generator, a machine-learned audio generator, and a machine-learned video generator.

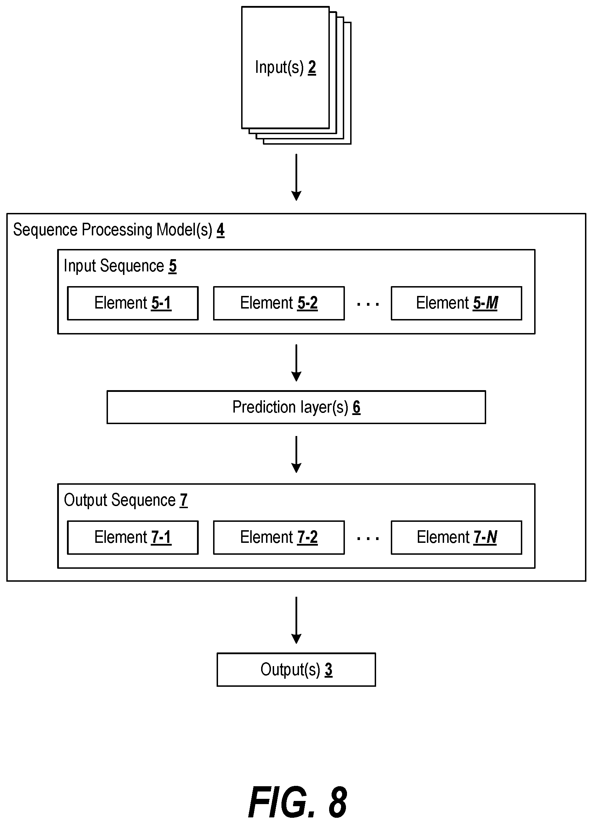

One or more portion(s) of example method 1000 can be implemented by a computing system that includes one or more computing devices such as, for example, computing systems described with reference to the other figures. Each respective portion of example method 1000 can be performed by any (or any combination) of one or more computing devices. Moreover, one or more portion(s) of example method 1000 can be implemented on the hardware components of the device(s) described herein, for example, to train one or more systems or models. Figure 8 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. Figure 8 is described with reference to elements/terms described with respect to other systems and figures for exemplary illustrated purposes and is not meant to be limiting. One or more portions of example method 1000 can be performed additionally, or alternatively, by other systems.

At 1002, example method 1000 can include obtaining a training instance. A set of training data can include a plurality of training instances divided between multiple datasets (e.g., a training dataset, a validation dataset, or testing dataset). A training instance can be labeled or unlabeled. Although referred to in example method 1000 as a "training" instance, it is to be understood that runtime inferences can form training instances when a model is trained using an evaluation of the model's performance on that runtime instance (e.g., online training/learning). Example data types for the training instance and various tasks associated therewith are described throughout the present disclosure.

At 1004, example method 1000 can include processing, using one or more machine-learned models, the training instance to generate an output. The output can be directly obtained from the one or more machine-learned models or can be a downstream result of a chain of processing operations that includes an output of the one or more machine-learned models.

At 1006, example method 1000 can include receiving an evaluation signal associated with the output. The evaluation signal can be obtained using a loss function. Various determinations of loss can be used, such as mean squared error, likelihood loss, cross entropy loss, hinge loss, contrastive loss, or various other loss functions. The evaluation signal can be computed using known ground-truth labels (e.g., supervised learning), predicted or estimated labels (e.g., semi- or self-supervised learning), or without labels (e.g., unsupervised learning). The evaluation signal can be a reward (e.g., for reinforcement learning). The reward can be computed using a machine-learned reward model configured to generate rewards based on output(s) received. The reward can be computed using feedback data describing human feedback on the output(s).

At 1008, example method 1000 can include updating the machine-learned model using the evaluation signal. For example, values for parameters of the machine-learned model(s) can be learned, in some embodiments, using various training or learning techniques, such as, for example, backwards propagation. For example, the evaluation signal can be back propagated from the output (or another source of the evaluation signal) through the machine-learned model(s) to update one or more parameters of the model(s) (e.g., based on a gradient of the evaluation signal with respect to the parameter value(s)). For example, system(s) containing one or more machine-learned models can be trained in an end-to-end manner. Gradient descent techniques can be used to iteratively update the parameters over a number of training iterations. In some implementations, performing backwards propagation of errors can include performing truncated backpropagation through time. Example method 1000 can include implementing a number of generalization techniques (e.g., weight decays, dropouts, etc.) to improve the generalization capability of the models being trained.

In some implementations, example method 1000 can be implemented for training a machine-learned model from an initialized state to a fully trained state (e.g., when the model exhibits a desired performance profile, such as based on accuracy, precision, recall, etc.).

In some implementations, example method 1000 can be implemented for particular stages of a training procedure. For instance, in some implementations, example method 1000 can be implemented for pre-training a machine-learned model. Pre-training can include, for instance, large-scale training over potentially noisy data to achieve a broad base of performance levels across a variety of tasks/data types. In some implementations, example method 1000 can be implemented for fine-tuning a machine-learned model. Fine tuning can include, for instance, smaller-scale training on higher-quality (e.g., labeled, curated, etc.) data. Fine-tuning can affect all or a portion of the parameters of a machine-learned model. For example, various portions of the machine-learned model can be "frozen" for certain training stages. For example, parameters associated with an embedding space can be "frozen" during fine-tuning (e.g., to retain information learned from a broader domain(s) than present in the fine-tuning dataset(s)). An example fine-tuning approach includes reinforcement learning. Reinforcement learning can be based on user feedback on model performance during use.

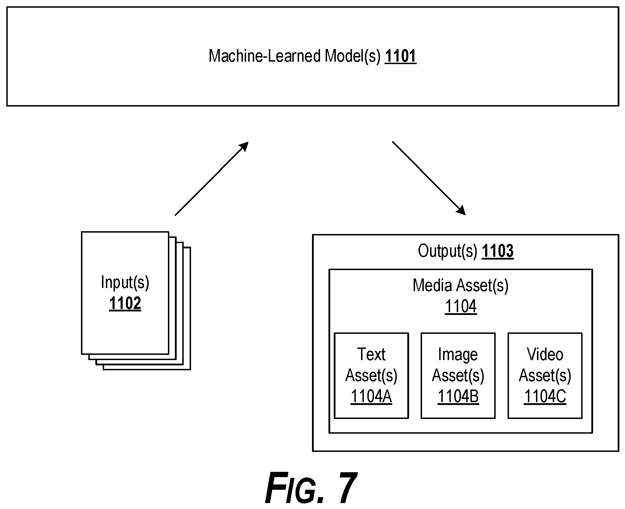

Figure 7 is a block diagram of an example processing flow for using machine-learned model(s) 1101 to process input(s) 1102 to generate output(s) 1103.

Machine-learned model(s) 1101 can be or include one or multiple machine-learned models or model components. For instance, machine-learned model(s) 1101 can include machine-learned media asset generation model 1101A and/or machine-learned content item generation model 1101B. Example machine-learned models can include neural networks (e.g., deep neural networks). Example machine-learned models can include non-linear models or linear models. Example machine-learned models can use other architectures in lieu of or in addition to neural networks. Example machine-learned models can include decision tree based models, support vector machines, hidden Markov models, Bayesian networks, linear regression models, k-means clustering models, etc.

Example neural networks can include feed-forward neural networks, recurrent neural networks (RNNs), including long short-term memory (LSTM) based RNNs, convolutional neural networks (CNNs), diffusion models, generative-adversarial networks, or other forms of neural networks. Example neural networks can be deep neural networks. Some example machine-learned models can leverage an attention mechanism such as self-attention. For example, some example machine-learned models can include multi-headed self-attention models.

Machine-learned model(s) 1101 can include a single or multiple instances of the same model configured to operate on data from input(s) 1102. Machine-learned model(s) 1101 can include an ensemble of different models that can cooperatively interact to process data from input(s) 1102. For example, machine-learned model(s) 1101 701 can employ a mixture-of-experts structure.

Input(s) 1102 can generally include or otherwise represent various types of data. Input(s) 1102 can include one type or many different types of data. For instance, inputs can include existing media asset(s) 1102A (e.g., existing content items) and/or data resources 1102B. Output(s) 1103 can be data of the same type(s) or of different types of data as compared to input(s) 1102. Output(s) 1103 can include one type or many different types of data. For instance, output(s) 1103 can include media asset(s) 1104 and/or content item(s) 1105. Media asset(s) 1104 can include, for example, text asset(s) 1104A, image asset(s) 1104B, and/or unique profile data 1104C.

Example data types for input(s) 1102 or output(s) 1103 include natural language text data, software code data (e.g., source code, object code, machine code, or any other form of computer-readable instructions or programming languages), machine code data (e.g., binary code, assembly code, or other forms of machine-readable instructions that can be executed directly by a computer's central processing unit), assembly code data (e.g., low-level programming languages that use symbolic representations of machine code instructions to program a processing unit), genetic data or other chemical or biochemical data, image data, audio data, audiovisual data, haptic data, biometric data, medical data, financial data, statistical data, geographical data, astronomical data, historical data, sensor data generally (e.g., digital or analog values, such as voltage or other absolute or relative level measurement values from a real or artificial input, such as from an audio sensor, light sensor, displacement sensor, etc.), and the like. Data can be raw or processed and can be in any format or schema.

In multimodal inputs 1102 or outputs 1103, example combinations of data types include image data and audio data, image data and natural language data, natural language data and software code data, image data and biometric data, sensor data and medical data, etc. It is to be understood that any combination of data types in an input 1102 or an output 1103 can be present.

An example input 1102 can include one or multiple data types, such as the example data types noted above. An example output 1103 can include one or multiple data types, such as the example data types noted above. The data type(s) of input 1102 can be the same as or different from the data type(s) of output 1103. It is to be understood that the example data types noted above are provided for illustrative purposes only. Data types contemplated within the scope of the present disclosure are not limited to those examples noted above.

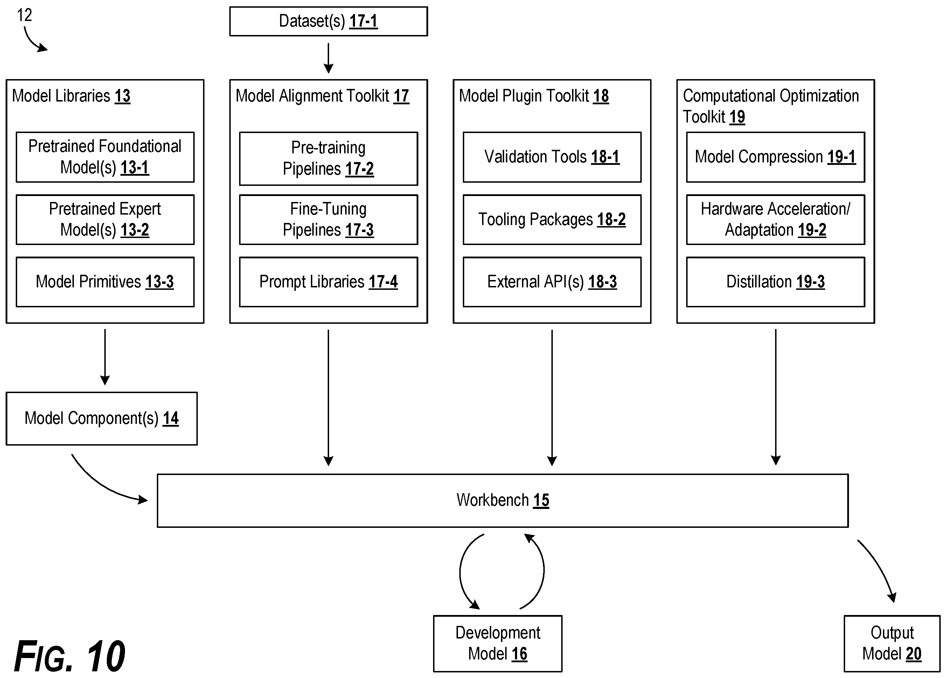

Figure 10 is a block diagram of an example implementation of an example machine-learned model configured to process sequences of information. For instance, an example implementation of machine-learned model(s) 1101 can include machine-learned sequence processing model(s) 4. An example system can pass input(s) 1102 to sequence processing model(s) 4. Sequence processing model(s) 4 can include one or more machine-learned components. Sequence processing model(s) 4 can process the data from input(s) 1102 to obtain an input sequence 5. Input sequence 5 can include one or more input elements 5-1, 5-2, ... , 5-M, etc. obtained from input(s) 1102. Sequence processing model 4 can process input sequence 5 using prediction layer(s) 6 to generate an output sequence 7. Output sequence 7 can include one or more output elements 7-1, 7-2, ... , 7-N, etc. generated based on input sequence 5. The system can generate output(s) 1103 based on output sequence 7.

Sequence processing model(s) 4 can include one or multiple machine-learned model components configured to ingest, generate, or otherwise reason over sequences of information. For example, some example sequence processing models in the text domain are referred to as "LLMs," or LLMs. See, e.g., PaLM 2 Technical Report, Google, https://ai.google/static/documents/palm2techreport.pdf (n.d.). Other example sequence processing models can operate in other domains, such as image domains, see, e.g., Dosovitskiy et al., An Image is Worth 16x16 Words: Transformers for Image Recognition at Scale, arXiv:2010.11929v2 (Jun. 3, 2021), audio domains, see, e.g., Agostinelli et al., MusicLM: Generating Music From Text, arXiv:2301.11325v1 (Jan. 26, 2023), biochemical domains, see, e.g., Jumper et al., Highly accurate protein structure prediction with AlphaFold, 596 Nature 583 (Aug. 26, 2021), by way of example. Sequence processing model(s) 4 can process one or multiple types of data simultaneously. Sequence processing model(s) 4 can include relatively large models (e.g., more parameters, computationally expensive, etc.), relatively small models (e.g., fewer parameters, computationally lightweight, etc.), or both.

In general, sequence processing model(s) 4 can obtain input sequence 5 using data from input(s) 1102. For instance, input sequence 5 can include a representation of data from input(s) 1102 in a format understood by sequence processing model(s) 4. One or more machine-learned components of sequence processing model(s) 4 can ingest the data from input(s) 1102, parse the data into pieces compatible with the processing architectures of sequence processing model(s) 4 (e.g., via "tokenization"), and project the pieces into an input space associated with prediction layer(s) 6 (e.g., via "embedding").

Sequence processing model(s) 4 can ingest the data from input(s) 1102 and parse the data into a sequence of elements to obtain input sequence 5. For example, a portion of input data from input(s) 1102 can be broken down into pieces that collectively represent the content of the portion of the input data. The pieces can provide the elements of the sequence.

Elements 5-1, 5-2, ..., 5-M can represent, in some cases, building blocks for capturing or expressing meaningful information in a particular data domain. For instance, the elements can describe "atomic units" across one or more domains. For example, for textual input source(s), the elements can correspond to groups of one or more words or sub-word components, such as sets of one or more characters.

For example, elements 5-1, 5-2, . . . , 5-M can represent tokens obtained using a tokenizer. For instance, a tokenizer can process a given portion of an input source and output a series of tokens (e.g., corresponding to input elements 5-1, 5-2, . . . , 5-M) that represent the portion of the input source. Various approaches to tokenization can be used. For instance, textual input source(s) can be tokenized using a byte-pair encoding (BPE) technique. Image-based input source(s) can be tokenized by extracting and serializing patches from an image.

In general, arbitrary data types can be serialized and processed into input sequence 5. It is to be understood that element(s) 5-1, 5-2, . . . , 5-M depicted in Figure 10 can be the tokens or can be the embedded representations thereof.

Prediction layer(s) 6 can predict one or more output elements 7-1, 7-2, . . . , 7-N based on the input elements. Prediction layer(s) 6 can include one or more machine-learned model architectures, such as one or more layers of learned parameters that manipulate and transform the input(s) to extract higher-order meaning from, and relationships between, input element(s) 5-1, 5-2, . . . , 5-M. In this manner, for instance, example prediction layer(s) 6 can predict new output element(s) in view of the context provided by input sequence 5.

Prediction layer(s) 6 can evaluate associations between portions of input sequence 5 and a particular output element. These associations can inform a prediction of the likelihood that a particular output follows the input context. For example, consider the textual snippet, "The carpenter's toolbox was small and heavy. It was full of __." Example prediction layer(s) 6 can identify that "It" refers back to "toolbox" by determining a relationship between the respective embeddings. Example prediction layer(s) 6 can also link "It" to the attributes of the toolbox, such as "small" and "heavy." Based on these associations, prediction layer(s) 6 can, for instance, assign a higher probability to the word "nails" than to the word "sawdust."

A transformer is an example architecture that can be used in prediction layer(s) 4. A transformer is an example of a machine-learned model architecture that uses an attention mechanism to compute associations between items within a context window. The context window can include a sequence that contains input sequence 5 and potentially one or more output element(s) 7-1, 7-2, ... , 7-N. A transformer block can include one or more attention layer(s) and one or more post-attention layer(s) (e.g., feedforward layer(s), such as a multi-layer perceptron).

Prediction layer(s) 6 can include other machine-learned model architectures in addition to or in lieu of transformer-based architectures. For example, RNNs and LSTM models can also be used, as well as CNNs. In general, prediction layer(s) 6 can leverage various kinds of artificial neural networks that can understand or generate sequences of information.

Output sequence 7 can include or otherwise represent the same or different data types as input sequence 5. For instance, input sequence 5 can represent textual data, and output sequence 7 can represent textual data. Input sequence 5 can represent image, audio, or audiovisual data, and output sequence 7 can represent textual data (e.g., describing the image, audio, or audiovisual data). It is to be understood that prediction layer(s) 6, and any other interstitial model components of sequence processing model(s) 4, can be configured to receive a variety of data types in input sequence(s) 5 and output a variety of data types in output sequence(s) 7.

Output sequence 7 can have various relationships to input sequence 5. Output sequence 7 can be a continuation of input sequence 5. Output sequence 7 can be complementary to input sequence 5. Output sequence 7 can translate, transform, augment, or otherwise modify input sequence 5. Output sequence 7 can answer, evaluate, confirm, or otherwise respond to input sequence 5. Output sequence 7 can implement (or describe instructions for implementing) an instruction provided via input sequence 5.

Output sequence 7 can be generated autoregressively. For instance, for some applications, an output of one or more prediction layer(s) 6 can be passed through one or more output layers (e.g., softmax layer) to obtain a probability distribution over an output vocabulary (e.g., a textual or symbolic vocabulary) conditioned on a set of input elements in a context window. In this manner, for instance, output sequence 7 can be autoregressively generated by sampling a likely next output element, adding that element to the context window, and re-generating the probability distribution based on the updated context window, and sampling a likely next output element, and so forth.

Output sequence 7 can also be generated non-autoregressively. For instance, multiple output elements of output sequence 7 can be predicted together without explicit sequential conditioning on each other.

Output sequence 7 can include one or multiple portions or elements. In an example content generation configuration, output sequence 7 can include multiple elements corresponding to multiple portions of a generated output sequence (e.g., a textual sentence, values of a discretized waveform, computer code, etc.). In an example classification configuration, output sequence 7 can include a single element associated with a classification output. For instance, an output "vocabulary" can include a set of classes into which an input sequence is to be classified. For instance, a vision transformer block can pass latent state information to a multilayer perceptron that outputs a likely class value associated with an input image.

Figure 7 is a block diagram of an example technique for populating an example input sequence 8. Input sequence 8 can include various functional elements that form part of the model infrastructure, such as an element 8-0 obtained from a task indicator 9 that signals to any model(s) that process input sequence 8 that a particular task is being performed (e.g., to help adapt a performance of the model(s) to that particular task). Input sequence 8 can include various data elements from different data modalities. For instance, an input modality 10-1 can include one modality of data. A data-to-sequence model 11-1 can process data from input modality 10-1 to project the data into a format compatible with input sequence 8 (e.g., one or more vectors dimensioned according to the dimensions of input sequence 8) to obtain elements 8-1, 8-2, 8-3. Another input modality 10-2 can include a different modality of data. A data-to-sequence model 11-2 can project data from input modality 10-2 into a format compatible with input sequence 8 to obtain elements 8-4, 8-5, 8-6. Another input modality 10-3 can include yet another different modality of data. A data-to-sequence model 11-3 can project data from input modality 10-3 into a format compatible with input sequence 8 to obtain elements 8-7, 8-8, 8-9.

Input sequence 8 can be the same as or different from input sequence 5. Input sequence 8 can be a multimodal input sequence that contains elements that represent data from different modalities using a common dimensional representation. For instance, an embedding space can have P dimensions. Input sequence 8 can be configured to contain a plurality of elements that have P dimensions. In this manner, for instance, example implementations can facilitate information extraction and reasoning across diverse data modalities by projecting data into elements in the same embedding space for comparison, combination, or other computations there between.

For example, elements 8-0, . . . , 8-9 can indicate particular locations within a multidimensional embedding space. Some elements can map to a set of discrete locations in the embedding space. For instance, elements that correspond to discrete members of a predetermined vocabulary of tokens can map to discrete locations in the embedding space that are associated with those tokens. Other elements can be continuously distributed across the embedding space. For instance, some data types can be broken down into continuously defined portions (e.g., image patches) that can be described using continuously distributed locations within the embedding space.

In some implementations, the expressive power of the embedding space may not be limited to meanings associated with any particular set of tokens or other building blocks. For example, a continuous embedding space can encode a spectrum of high-order information. An individual piece of information (e.g., a token) can map to a particular point in that space: for instance, a token for the word "dog" can be projected to an embedded value that points to a particular location in the embedding space associated with canine-related information. Similarly, an image patch of an image of a dog on grass can also be projected into the embedding space. In some implementations, the projection of the image of the dog can be similar to the projection of the word "dog" while also having similarity to a projection of the word "grass," while potentially being different from both. In some implementations, the projection of the image patch may not exactly align with any single projection of a single word. In some implementations, the projection of the image patch can align with a combination of the projections of the words "dog" and "grass." In this manner, for instance, a high-order embedding space can encode information that can be independent of data modalities in which the information is expressed.

Task indicator 9 can include a model or model component configured to identify a task being performed and inject, into input sequence 8, an input value represented by element 8-0 that signals which task is being performed. For instance, the input value can be provided as a data type associated with an input modality and projected along with that input modality (e.g., the input value can be a textual task label that is embedded along with other textual data in the input; the input value can be a pixel-based representation of a task that is embedded along with other image data in the input; etc.). The input value can be provided as a data type that differs from or is at least independent from other input(s). For instance, the input value represented by element 8-0 can be learned within a continuous embedding space.

Input modalities 10-1, 10-2, and 10-3 can be associated with various different data types (e.g., as described above with respect to input(s) 1102 and output(s) 1103).

Data-to-sequence models 11-1, 11-2, and 11-3 can be the same or different from each other. Data-to-sequence models 11-1, 11-2, and 11-3 can be adapted to each respective input modality 10-1, 10-2, and 10-3. For example, a textual data-to-sequence model can subdivide a portion of input text and project the subdivisions into element(s) in input sequence 8 (e.g., elements 8-1, 8-2, 8-3, etc.). An image data-to-sequence model can subdivide an input image and project the subdivisions into element(s) in input sequence 8 (e.g., elements 8-4, 8-5, 8-6, etc.). An arbitrary datatype data-to-sequence model can subdivide an input of that arbitrary datatype and project the subdivisions into element(s) in input sequence 8 (e.g., elements 8-7, 8-8, 8-9, etc.).

Data-to-sequence models 11-1, 11-2, and 11-3 can form part of machine-learned sequence processing model(s) 4. Data-to-sequence models 11-1, 11-2, and 11-3 can be jointly trained with or trained independently from machine-learned sequence processing model(s) 4. Data-to-sequence models 11-1, 11-2, and 11-3 can be trained end-to-end with machine-learned sequence processing model(s) 4.

Figure 8 is a block diagram of an example model development platform 12 that can facilitate creation, adaptation, and refinement of example machine-learned models (e.g., machine-learned model(s) 1101, sequence processing model(s) 4, etc.). Model development platform 12 can provide a number of different toolkits that developer systems can employ in the development of new or adapted machine-learned models.

Model development platform 12 can provide one or more model libraries 13 containing building blocks for new models. Model libraries 13 can include one or more pre-trained foundational models 13-1, which can provide a backbone of processing power across various tasks. Model libraries 13 can include one or more pre-trained expert models 13-2, which can be focused on performance in particular domains of expertise. Model libraries 13 can include various model primitives 13-3, which can provide low-level architectures or components (optionally pre-trained), which can be assembled in various arrangements as desired.

Model development platform 12 can receive selections of various model components 14. Model development platform 12 can pass selected model components 14 to a workbench 15 that combines selected model components 14 into a development model 16.

Workbench 15 can facilitate further refinement and adaptation of development model 16 by leveraging a number of different toolkits integrated with model development platform 12. For example, workbench 15 can facilitate alignment of the development model 16 with a desired performance profile on various tasks using a model alignment toolkit 17.

Model alignment toolkit 17 can provide a number of tools for causing development model 16 to generate outputs aligned with desired behavioral characteristics. Alignment can include increasing the accuracy, precision, recall, etc. of model outputs. Alignment can include enforcing output styles, schema, or other preferential characteristics of model outputs. Alignment can be general or domain specific. For instance, a pre-trained foundational model 13-1 can begin with an initial level of performance across multiple domains. Alignment of the pre-trained foundational model 13-1 can include improving a performance in a particular domain of information or tasks (e.g., even at the expense of performance in another domain of information or tasks).

Model alignment toolkit 17 can integrate one or more dataset(s) 17-1 for aligning development model 16. Curated dataset(s) 17-1 can include labeled or unlabeled training data. Dataset(s) 17-1 can be obtained from public domain datasets. Dataset(s) 17-1 can be obtained from private datasets associated with one or more developer system(s) for the alignment of bespoke machine-learned model(s) customized for private use-cases.

Pre-training pipelines 17-2 can include a machine-learned model training workflow configured to update development model 16 over large-scale, potentially noisy datasets. For example, pre-training can leverage unsupervised learning techniques (e.g., de-noising, etc.) to process large numbers of training instances to update model parameters from an initialized state and achieve a desired baseline performance. Pre-training pipelines 17-2 can leverage unlabeled datasets in dataset(s) 17-1 to perform pre-training. Workbench 15 can implement a pre-training pipeline 17-2 to pre-train development model 16.

Fine-tuning pipelines 17-3 can include a machine-learned model training workflow configured to refine the model parameters of development model 16 with higher-quality data. Fine-tuning pipelines 17-3 can update development model 16 by conducting supervised training with labeled dataset(s) in dataset(s) 17-1. Fine-tuning pipelines 17-3 can update development model 16 by conducting reinforcement learning using reward signals from user feedback signals. Workbench 15 can implement a fine-tuning pipeline 17-3 to fine-tune development model 16.

Prompt libraries 17-4 can include sets of inputs configured to induce behavior aligned with desired performance criteria. Prompt libraries 17-4 can include few-shot prompts (e.g., inputs providing examples of desired model outputs for prepending to a desired runtime query), chain-of-thought prompts (e.g., inputs providing step-by-step reasoning within the exemplars to facilitate thorough reasoning by the model), and the like.

Example prompts can be retrieved from an available repository of prompt libraries 17-4. Example prompts can be contributed by one or more developer systems using workbench 15.

In some implementations, pre-trained or fine-tune models can achieve satisfactory performance without examples in the inputs. For instance, zero-shot prompts can include inputs that lack examples. Zero-shot prompts can be within a domain within a training dataset or outside of the training domain(s).

Prompt libraries 17-4 can include one or more prompt engineering tools. Prompt engineering tools can provide workflows for retrieving or learning optimized prompt values. Prompt engineering tools can facilitate directly learning prompt values (e.g., input element values) based on one or more training iterations. Workbench 15 can implement prompt engineering tools in development model 16.

Prompt libraries 17-4 can include pipelines for prompt generation. For example, inputs can be generated using development model 16 itself or other machine-learned models. In this manner, for instance, a first model can process information about a task and output an input for a second model to process in order to perform a step of the task. The second model can be the same as or different from the first model. Workbench 15 can implement prompt generation pipelines in development model 16.

Prompt libraries 17-4 can include pipelines for context injection. For instance, a performance of development model 16 on a particular task can improve if provided with additional context for performing the task. Prompt libraries 17-4 can include software components configured to identify desired context, retrieve the context from an external source (e.g., a database, a sensor, etc.), and add the context to the input prompt. Workbench 15 can implement context injection pipelines in development model 16.

Although various training examples described herein with respect to model development platform 12 refer to "pre-training" and "fine-tuning," it is to be understood that model alignment toolkit 17 can generally support a wide variety of training techniques adapted for training a wide variety of machine-learned models. Example training techniques can correspond to the example training method 1600 described above.

Model development platform 12 can include a model plugin toolkit 18. Model plugin toolkit 18 can include a variety of tools configured for augmenting the functionality of a machine-learned model by integrating the machine-learned model with other systems, devices, and software components. For instance, a machine-learned model can use tools to increase performance quality where appropriate. For instance, deterministic tasks can be offloaded to dedicated tools in lieu of probabilistically performing the task with an increased risk of error. For instance, instead of autoregressively predicting the solution to a system of equations, a machine-learned model can recognize a tool to call for obtaining the solution and pass the system of equations to the appropriate tool. The tool can be a traditional system of equations solver that can operate deterministically to resolve the system of equations. The output of the tool can be returned in response to the original query. In this manner, tool use can allow some example models to focus on the strengths of machine-learned models-e.g., understanding an intent in an unstructured request for a task-while augmenting the performance of the model by offloading certain tasks to a more focused tool for rote application of deterministic algorithms to a well-defined problem.

Model plugin toolkit 18 can include validation tools 18-1. Validation tools 18-1 can include tools that can parse and confirm output(s) of a machine-learned model. Validation tools 18-1 can include engineered heuristics that establish certain thresholds applied to model outputs. For example, validation tools 18-1 can ground the outputs of machine-learned models to structured data sources (e.g., to mitigate "hallucinations").

Model plugin toolkit 18 can include tooling packages 18-2 for implementing one or more tools that can include scripts or other executable code that can be executed alongside development model 16. Tooling packages 18-2 can include one or more inputs configured to cause machine-learned model(s) to implement the tools (e.g., few-shot prompts that induce a model to output tool calls in the proper syntax, etc.). Tooling packages 18-2 can include, for instance, fine-tuning training data for training a model to use a tool.

Model plugin toolkit 18 can include interfaces for calling external application programming interfaces (APIs) 18-3. For instance, in addition to or in lieu of implementing tool calls or tool code directly with development model 16, development model 16 can be aligned to output instructions that initiate API calls to send or obtain data via external systems.

Model plugin toolkit 18 can integrate with prompt libraries 17-4 to build a catalog of available tools for use with development model 16. For instance, a model can receive, in an input, a catalog of available tools, and the model can generate an output that selects a tool from the available tools and initiates a tool call for using the tool.

Model development platform 12 can include a computational optimization toolkit 19 for optimizing a computational performance of development model 16. For instance, tools for model compression 19-1 can allow development model 16 to be reduced in size while maintaining a desired level of performance. For instance, model compression 19-1 can include quantization workflows, weight pruning and sparsification techniques, etc. Tools for hardware acceleration 19-2 can facilitate the configuration of the model storage and execution formats to operate optimally on different hardware resources. For instance, hardware acceleration 19-2 can include tools for optimally sharding models for distributed processing over multiple processing units for increased bandwidth, lower unified memory requirements, etc. Tools for distillation 19-3 can provide for the training of lighter-weight models based on the knowledge encoded in development model 16. For instance, development model 16 can be a highly performant, large machine-learned model optimized using model development platform 12. To obtain a lightweight model for running in resource-constrained environments, a smaller model can be a "student model" that learns to imitate development model 16 as a "teacher model." In this manner, for instance, the investment in learning the parameters and configurations of development model 16 can be efficiently transferred to a smaller model for more efficient inference.

Workbench 15 can implement one, multiple, or none of the toolkits implemented in model development platform 12. Workbench 15 can output an output model 20 based on development model 16. Output model 20 can be a deployment version of development model 16. Output model 20 can be a development or training checkpoint of development model 16. Output model 20 can be a distilled, compressed, or otherwise optimized version of development model 16.

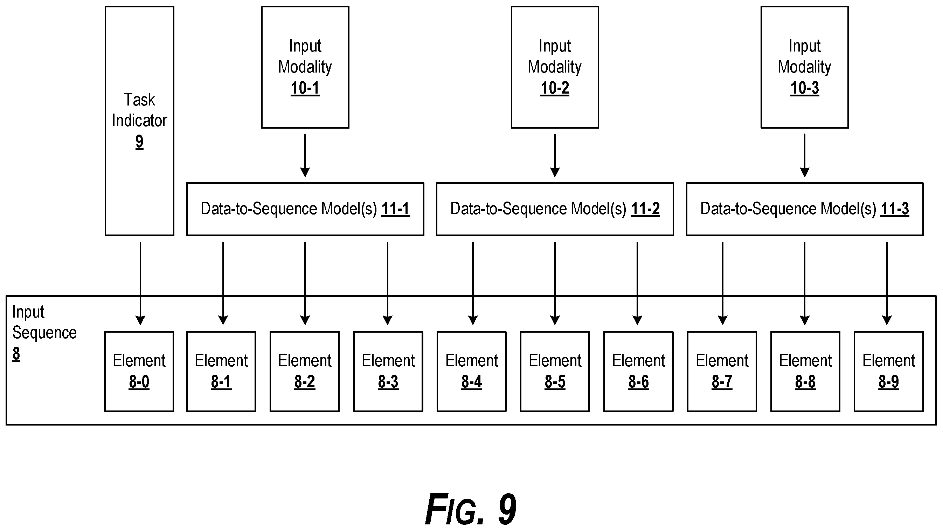

Figure 9 is a block diagram of an example training flow for training a machine-learned development model 16. One or more portion(s) of the example training flow can be implemented by a computing system that includes one or more computing devices such as, for example, computing systems described with reference to the other figures. Each respective portion of the example training flow can be performed by any (or any combination) of one or more computing devices. Moreover, one or more portion(s) of the example training flow can be implemented on the hardware components of the device(s) described herein, for example, to train one or more systems or models. FIG. 21 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. FIG. 21 is described with reference to elements/terms described with respect to other systems and figures for exemplary illustrated purposes and is not meant to be limiting. One or more portions of the example training flow can be performed additionally, or alternatively, by other systems.

Initially, development model 16 can persist in an initial state as an initialized model 21. Development model 16 can be initialized with weight values. Initial weight values can be random or based on an initialization schema. Initial weight values can be based on prior pre-training for the same or for a different model.

Initialized model 21 can undergo pre-training in a pre-training stage 22. Pre-training stage 22 can be implemented using one or more pre-training pipelines 17-2 over data from dataset(s) 17-1. Pre-training can be omitted, for example, if initialized model 21 is already pre-trained (e.g., development model 16 contains, is, or is based on a pre-trained foundational model or an expert model).

Pre-trained model 23 can then be a new version of development model 16, which can persist as development model 16 or as a new development model. Pre-trained model 23 can be the initial state if development model 16 was already pre-trained. Pre-trained model 23 can undergo fine-tuning in a fine-tuning stage 24. Fine-tuning stage 24 can be implemented using one or more fine-tuning pipelines 17-3 over data from dataset(s) 17-1. Fine-tuning can be omitted, for example, if a pre-trained model has satisfactory performance, if the model was already fine-tuned, or if other tuning approaches are preferred.

Fine-tuned model 29 can then be a new version of development model 16, which can persist as development model 16 or as a new development model. Fine-tuned model 29 can be the initial state of development model 16 was already fine-tuned. Fine-tuned model 29 can undergo refinement with user feedback 26. For instance, refinement with user feedback 26 can include reinforcement learning, optionally based on human feedback from human users of fine-tuned model 25. As reinforcement learning can be a form of fine-tuning, it is to be understood that fine-tuning stage 24 can subsume the stage for refining with user feedback 26. Refinement with user feedback 26 can produce a refined model 27. Refined model 27 can be output to downstream system(s) 28 for deployment or further development.

In some implementations, computational optimization operations can be applied before, during, or after each stage. For instance, initialized model 21 can undergo computational optimization 29-1 (e.g., using computational optimization toolkit 19) before pre-training stage 22. Pre-trained model 23 can undergo computational optimization 29-2 (e.g., using computational optimization toolkit 19) before fine-tuning stage 24. Fine-tuned model 25 can undergo computational optimization 29-3 (e.g., using computational optimization toolkit 19) before refinement with user feedback 26. Refined model 27 can undergo computational optimization 29-4 (e.g., using computational optimization toolkit 19) before output to downstream system(s) 28. Computational optimization(s) 29-1, . . . , 29-4 can all be the same, all be different, or include at least some different optimization techniques.

Figure 10 is a block diagram of an inference system for operating one or more machine-learned model(s) 1101 to perform inference (e.g., for training, for deployment, etc.). A model host 31 can receive machine-learned model(s) 1101 . Model host 31 can host one or more model instance(s) 31-1, which can be one or multiple instances of one or multiple models. Model host 31 can host model instance(s) 31-1 using available computer resources 31-2 associated with model host 31.

Model host 31 can perform inference on behalf of one or more client(s) 32. Client(s) 32 can transmit an input request 33 to model host 31. Using input request 33, model host 31 can obtain input(s) 1102 for input to machine-learned model(s) 1101 . Machine-learned model(s) 1 can process input(s) 1102 to generate output(s) 1103. Using output(s) 1103, model host 31 can return an output payload 34 for responding to input request 33 from client(s) 32. Output payload 34 can include or be based on output(s) 1103.

Model host 31 can leverage various other resources and tools to augment the inference task. For instance, model host 31 can communicate with tool interfaces 35 to facilitate tool use by model instance(s) 31-1. Tool interfaces 35 can include local or remote APIs. Tool interfaces 35 can include integrated scripts or other software functionality. Model host 31 can engage online learning interface(s) 36 to facilitate ongoing improvements to machine-learned model(s) 1101 . For instance, online learning interface(s) 36 can be used within reinforcement learning loops to retrieve user feedback on inferences served by model host 31. Model host 31 can access runtime data source(s) 37 for augmenting input(s) 1102 with additional contextual information. For instance, runtime data source(s) 37 can include a knowledge graph 37-1 that facilitates structured information retrieval for information associated with input request(s) 33 (e.g., a search engine service). Runtime data source(s) 37 can include public or private, external or local database(s) 37-2 that can store information associated with input request(s) 33 for augmenting input(s) 1102. Runtime data source(s) 37 can include account data 37-3 which can be retrieved in association with a user account corresponding to a client 32 for customizing the behavior of model host 31 accordingly.

Model host 31 can be implemented by one or multiple computing devices or systems. Client(s) 2 can be implemented by one or multiple computing devices or systems, which can include computing devices or systems shared with model host 31.

For example, model host 31 can operate on a server system that provides a machine-learning service to client device(s) that operate client(s) 32 (e.g., over a local or wide-area network). Client device(s) can be end-user devices used by individuals. Client device(s) can be server systems that operate client(s) 32 to provide various functionality as a service to downstream end-user devices.

In some implementations, model host 31 can operate on the same device or system as client(s) 32. Model host 31 can be a machine-learning service that runs on-device to provide machine-learning functionality to one or multiple applications operating on a client device, which can include an application implementing client(s) 32. Model host 31 can be a part of the same application as client(s) 32. For instance, model host 31 can be a subroutine or method implemented by one part of an application, and client(s) 32 can be another subroutine or method that engages model host 31 to perform inference functions within the application. It is to be understood that model host 31 and client(s) 32 can have various different configurations.

Model instance(s) 31-1 can include one or more machine-learned models that are available for performing inference. Model instance(s) 31-1 can include weights or other model components that are stored in persistent storage, temporarily cached, or loaded into high-speed memory. Model instance(s) 31-1 can include multiple instance(s) of the same model (e.g., for parallel execution of more requests on the same model). Model instance(s) 31-1 can include instance(s) of different model(s). Model instance(s) 31-1 can include cached intermediate states of active or inactive model(s) used to accelerate inference of those models. For instance, an inference session with a particular model may generate significant amounts of computational results that can be re-used for future inference runs (e.g., using a KV cache for transformer-based models). These computational results can be saved in association with that inference session so that session can be executed more efficiently when resumed.

Compute resource(s) 31-2 can include one or more processors (central processing units, graphical processing units, tensor processing units, machine-learning accelerators, etc.) connected to one or more memory devices. Compute resource(s) 31-2 can include a dynamic pool of available resources shared with other processes. Compute resource(s) 31-2 can include memory devices large enough to fit an entire model instance in a single memory instance. Compute resource(s) 31-2 can also shard model instance(s) across multiple memory devices (e.g., using data parallelization or tensor parallelization, etc.). This can be done to increase parallelization or to execute a large model using multiple memory devices which individually might not be able to fit the entire model into memory.

Input request 33 can include data for input(s) 1102. Model host 31 can process input request 33 to obtain input(s) 1102. Input(s) 2 can be obtained directly from input request 33 or can be retrieved using input request 33. Input request 33 can be submitted to model host 31 via an API.

Model host 31 can perform inference over batches of input requests 33 in parallel. For instance, a model instance 31-1 can be configured with an input structure that has a batch dimension. Separate input(s) 1102 can be distributed across the batch dimension (e.g., rows of an array). The separate input(s) 1102 can include completely different contexts. The separate input(s) 1102 can be multiple inference steps of the same task. The separate input(s) 1102 can be staggered in an input structure, such that any given inference cycle can be operating on different portions of the respective input(s) 1102. In this manner, for instance, model host 31 can perform inference on the batch in parallel, such that output(s) 1103 can also contain the batch dimension and return the inference results for the batched input(s) 1102 in parallel. In this manner, for instance, batches of input request(s) 33 can be processed in parallel for higher throughput of output payload(s) 34.

Output payload 34 can include or be based on output(s) 1103 from machine-learned model(s) 1101 . Model host 31 can process output(s) 1103 to obtain output payload 34. This can include chaining multiple rounds of inference (e.g., iteratively, recursively, across the same model(s) or different model(s)) to arrive at a final output for a task to be returned in output payload 34. Output payload 34 can be transmitted to client(s) 32 via an API.

Online learning interface(s) 36 can facilitate reinforcement learning of machine-learned model(s) 1101 . Online learning interface(s) 36 can facilitate reinforcement learning with human feedback (RLHF). Online learning interface(s) 36 can facilitate federated learning of machine-learned model(s) 1101 .

Model host 31 can execute machine-learned model(s) 1101 to perform inference for various tasks using various types of data. For example, various different input(s) 1102 and output(s) 1103 can be used for various different tasks. In some implementations, input(s) 1102 can be or otherwise represent image data. Machine-learned model(s) 1 can process the image data to generate an output. As an example, machine-learned model(s) 1101 can process the image data to generate an image recognition output (e.g., a recognition of the image data, a latent embedding of the image data, an encoded representation of the image data, a hash of the image data, etc.). As another example, machine-learned model(s) 1101 can process the image data to generate an image segmentation output. As another example, machine-learned model(s) 1101 can process the image data to generate an image classification output. As another example, machine-learned model(s) 1101 can process the image data to generate an image data modification output (e.g., an alteration of the image data, etc.). As another example, machine-learned model(s) 1101 can process the image data to generate an encoded image data output (e.g., an encoded and/or compressed representation of the image data, etc.). As another example, machine-learned model(s) 1101 can process the image data to generate an upscaled image data output. As another example, machine-learned model(s) 1101 can process the image data to generate a prediction output.

In some implementations, the task is a computer vision task. In some cases, input(s) 1102 includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some implementations, input(s) 1102 can be or otherwise represent natural language data. Machine-learned model(s) 1 can process the natural language data to generate an output. As an example, machine-learned model(s) 1101 can process the natural language data to generate a language encoding output. As another example, machine-learned model(s) 1101 can process the natural language data to generate a latent text embedding output. As another example, machine-learned model(s) 1101 can process the natural language data to generate a translation output. As another example, machine-learned model(s) 1101 can process the natural language data to generate a classification output. As another example, machine-learned model(s) 1101 can process the natural language data to generate a textual segmentation output. As another example, machine-learned model(s) 1101 can process the natural language data to generate a semantic intent output. As another example, machine-learned model(s) 1101 can process the natural language data to generate an upscaled text or natural language output (e.g., text or natural language data that is higher quality than the input text or natural language, etc.). As another example, machine-learned model(s) 1101 can process the natural language data to generate a prediction output (e.g., one or more predicted next portions of natural language content).

In some implementations, input(s) 1102 can be or otherwise represent speech data (e.g., data describing spoken natural language, such as audio data, textual data, etc.). Machine-learned model(s) 1 can process the speech data to generate an output. As an example, machine-learned model(s) 1101 can process the speech data to generate a speech recognition output. As another example, machine-learned model(s) 1101 can process the speech data to generate a speech translation output. As another example, machine-learned model(s) 1101 can process the speech data to generate a latent embedding output. As another example, machine-learned model(s) 1101 can process the speech data to generate an encoded speech output (e.g., an encoded and/or compressed representation of the speech data, etc.). As another example, machine-learned model(s) 1101 can process the speech data to generate an upscaled speech output (e.g., speech data that is higher quality than the input speech data, etc.). As another example, machine-learned model(s) 1101 can process the speech data to generate a textual representation output (e.g., a textual representation of the input speech data, etc.). As another example, machine-learned model(s) 1101 can process the speech data to generate a prediction output.

In some implementations, input(s) 1102 can be or otherwise represent latent encoding data (e.g., a latent space representation of an input, etc.). Machine-learned model(s) 1 can process the latent encoding data to generate an output. As an example, machine-learned model(s) 1101 can process the latent encoding data to generate a recognition output. As another example, machine-learned model(s) 1101 can process the latent encoding data to generate a reconstruction output. As another example, machine-learned model(s) 1101 can process the latent encoding data to generate a search output. As another example, machine-learned model(s) 1101 can process the latent encoding data to generate a reclustering output. As another example, machine-learned model(s) 1101 can process the latent encoding data to generate a prediction output.

In some implementations, input(s) 1102 can be or otherwise represent statistical data. Statistical data can be, represent, or otherwise include data computed and/or calculated from some other data source. Machine-learned model(s) 1 can process the statistical data to generate an output. As an example, machine-learned model(s) 1101 can process the statistical data to generate a recognition output. As another example, machine-learned model(s) 1101 can process the statistical data to generate a prediction output. As another example, machine-learned model(s) 1101 can process the statistical data to generate a classification output. As another example, machine-learned model(s) 1101 can process the statistical data to generate a segmentation output. As another example, machine-learned model(s) 1101 can process the statistical data to generate a visualization output. As another example, machine-learned model(s) 1101 can process the statistical data to generate a diagnostic output.

In some implementations, input(s) 1102 can be or otherwise represent sensor data. Machine-learned model(s) 1 can process the sensor data to generate an output. As an example, machine-learned model(s) 1101 can process the sensor data to generate a recognition output. As another example, machine-learned model(s) 1101 can process the sensor data to generate a prediction output. As another example, machine-learned model(s) 1101 can process the sensor data to generate a classification output. As another example, machine-learned model(s) 1101 can process the sensor data to generate a segmentation output. As another example, machine-learned model(s) 1101 can process the sensor data to generate a visualization output. As another example, machine-learned model(s) 1101 can process the sensor data to generate a diagnostic output. As another example, machine-learned model(s) 1101 can process the sensor data to generate a detection output.

In some implementations, machine-learned model(s) 1101 can be configured to perform a task that includes encoding input data for reliable and/or efficient transmission or storage (and/or corresponding decoding). For example, the task may be an audio compression task. The input may include audio data, and the output may comprise compressed audio data. In another example, the input includes visual data (e.g., one or more images or videos), the output comprises compressed visual data, and the task is a visual data compression task. In another example, the task may comprise generating an embedding for input data (e.g., input audio or visual data). In some cases, the input includes audio data representing a spoken utterance and the task is a speech recognition task. The output may comprise a text output which is mapped to the spoken utterance. In some cases, the task comprises encrypting or decrypting input data. In some cases, the task comprises a microprocessor performance task, such as branch prediction or memory address translation.

In some implementations, the task is a generative task, and machine-learned model(s) 1101 can be configured to output content generated in view of input(s) 1102. For instance, input(s) 1102 can be or otherwise represent data of one or more modalities that encodes context for generating additional content.

In some implementations, the task can be a text completion task. Machine-learned model(s) 1 can be configured to process input(s) 1102 that represents textual data and to generate output(s) 1103 that represent additional textual data that completes a textual sequence that includes input(s) 1102. For instance, machine-learned model(s) 1101 can be configured to generate output(s) 1103 to complete a sentence, paragraph, or portion of text that follows from a portion of text represented by input(s) 1102.

In some implementations, the task can be an instruction following the task. Machine-learned model(s) 1 can be configured to process input(s) 1102 that represent instructions to perform a function and to generate output(s) 1103 that advance a goal of satisfying the instruction function (e.g., at least a step of a multi-step procedure to perform the function). Output(s) 3 can represent data of the same or of a different modality as input(s) 1102. For instance, input(s) 1102 can represent textual data (e.g., natural language instructions for a task to be performed) and machine-learned model(s) 1101 can process input(s) 1102 to generate output(s) 1103 that represent textual data responsive to the instructions (e.g., natural language responses, programming language responses, machine language responses, etc.). Input(s) 2 can represent image data (e.g., image-based instructions for a task to be performed, optionally accompanied by textual instructions) and machine-learned model(s) 1101 can process input(s) 1102 to generate output(s) 1103 that represent textual data responsive to the instructions (e.g., natural language responses, programming language responses, machine language responses, etc.). One or more output(s) 1103 can be iteratively or recursively generated to sequentially process and accomplish steps toward accomplishing the requested functionality. For instance, an initial output can be executed by an external system or be processed by machine-learned model(s) 1101 to complete an initial step of performing a function. Multiple steps can be performed, with a final output being obtained that is responsive to the initial instructions.

In some implementations, the task can be a question answering task. Machine-learned model(s) 1 can be configured to process input(s) 1102 that represent a question to answer and to generate output(s) 1103 that advances a goal of returning an answer to the question (e.g., at least a step of a multi-step procedure to perform the function). Output(s) 3 can represent data of the same or of a different modality as input(s) 1102. For instance, input(s) 1102 can represent textual data (e.g., natural language instructions for a task to be performed) and machine-learned model(s) 1101 can process input(s) 1102 to generate output(s) 1103 that represent textual data responsive to the question (e.g., natural language responses, programming language responses, machine language responses, etc.). Input(s) 2 can represent image data (e.g., image-based instructions for a task to be performed, optionally accompanied by textual instructions) and machine-learned model(s) 1101 can process input(s) 1102 to generate output(s) 1103 that represent textual data responsive to the question (e.g., natural language responses, programming language responses, machine language responses, etc.). One or more output(s) 1103 can be iteratively or recursively generated to sequentially process and accomplish steps toward answering the question. For instance, an initial output can be executed by an external system or be processed by machine-learned model(s) 1101 to complete an initial step of obtaining an answer to the question (e.g., querying a database, performing a computation, executing a script, etc.). Multiple steps can be performed, with a final output being obtained that is responsive to the question.

In some implementations, the task can be an image generation task. Machine-learned model(s) 1 can be configured to process input(s) 1102 that represents context regarding a desired portion of image content. The context can include text data, image data, audio data, etc. Machine-learned model(s) 1 can be configured to generate output(s) 1103 that represent image data that depicts imagery related to the context. For instance, machine-learned model(s) 1101 can be configured to generate pixel data of an image. Values for channel(s) associated with the pixels in the pixel data can be selected based on the context (e.g., based on a probability determined based on the context).

In some implementations, the task can be an audio generation task. Machine-learned model(s) 1 can be configured to process input(s) 1102 that represents context regarding a desired portion of audio content. The context can include text data, image data, audio data, etc. Machine-learned model(s) 1 can be configured to generate output(s) 1103 that represents audio data related to the context. For instance, machine-learned model(s) 1101 can be configured to generate waveform data in the form of an image (e.g., a spectrogram). Values for channel(s) associated with pixels of the image can be selected based on the context. Machine-learned model(s) 1 can be configured to generate waveform data in the form of a sequence of discrete samples of a continuous waveform. Values of the sequence can be selected based on the context (e.g., based on a probability determined based on the context).

In some implementations, the task can be a data generation task. Machine-learned model(s) 1 can be configured to process input(s) 1102 that represent context regarding a desired portion of data (e.g., data from various data domains, such as sensor data, image data, multimodal data, statistical data, etc.). The desired data can be, for instance, synthetic data for training other machine-learned models. The context can include arbitrary data type(s). Machine-learned model(s) 1 can be configured to generate output(s) 1103 that represent data that aligns with the desired data. For instance, machine-learned model(s) 1101 can be configured to generate data values for populating a dataset. Values for the data object(s) can be selected based on the context (e.g., based on a probability determined based on the context).

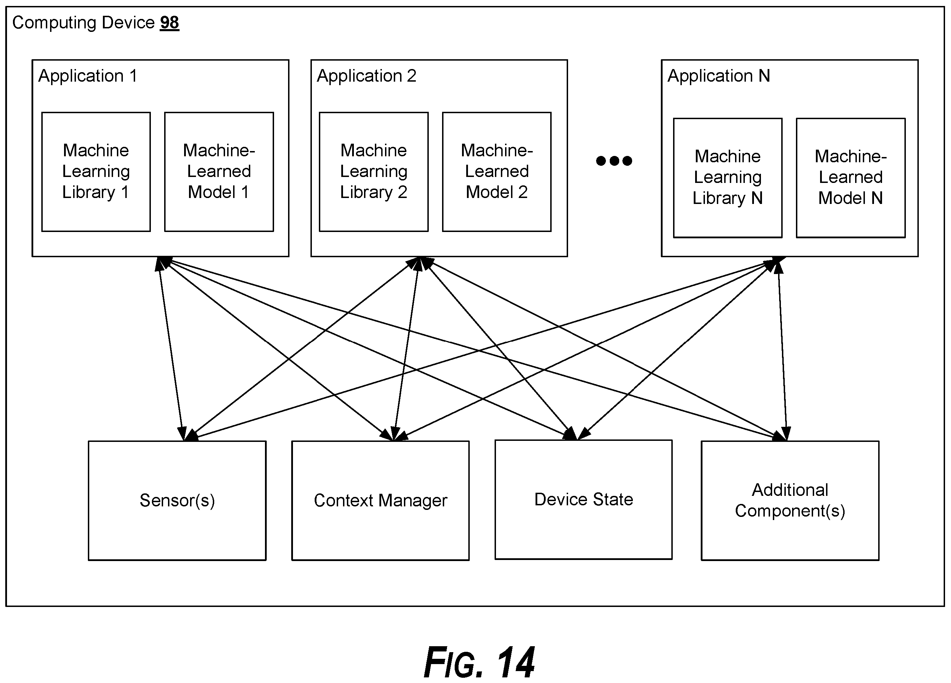

Figure 14 is a block diagram of an example networked computing system that can perform aspects of example implementations of the present disclosure. The system can include a number of computing devices and systems that are communicatively coupled over a network 49. An example computing device 50 is described to provide an example of a computing device that can perform any aspect of the present disclosure (e.g., implementing model host 31, client(s) 32, or both). An example server computing system 60 is described as an example of a server computing system that can perform any aspect of the present disclosure (e.g., implementing model host 31, client(s) 32, or both). Computing device 50 and server computing system(s) 60 can cooperatively interact (e.g., over network 49) to perform any aspect of the present disclosure (e.g., implementing model host 31, client(s) 32, or both). Model development platform system 70 is an example system that can host or serve model development platform(s) 12 for development of machine-learned models. Third-party system(s) 80 are example system(s) with which any computing device 50, server computing system(s) 60, or model development platform system(s) 70 can interact in the performance of various aspects of the present disclosure (e.g., engaging third-party tools, accessing third-party databases or other resources, etc.).

Network 49 can be any type of communications network, such as a local area network (e.g., intranet), wide area network (e.g., Internet), or some combination thereof and can include any number of wired or wireless links. In general, communication over network 49 can be carried via any type of wired or wireless connection, using a wide variety of communication protocols (e.g., TCP/IP, HTTP, SMTP, FTP), encodings or formats (e.g., HTML, XML), or protection schemes (e.g., VPN, secure HTTP, SSL). Network 49 can also be implemented via a system bus. For instance, one or more devices or systems of Figure 23 can be co-located with, contained by, or otherwise integrated into one or more other devices or systems.

Computing device 50 can be any type of computing device, such as, for example, a personal computing device (e.g., laptop or desktop), a mobile computing device (e.g., smartphone or tablet), a gaming console or controller, a wearable computing device, an embedded computing device, a server computing device, a virtual machine operating on a host device, or any other type of computing device. Computing device 50 can be a client computing device. Computing device 50 can be an end-user computing device. Computing device 50 can be a computing device of a service provided that provides a service to an end user (who may use another computing device to interact with computing device 50).

Computing device 50 can include one or more processors 51 and a memory 52. Processor(s) 51 can be any suitable processing device (e.g., a processor core, a microprocessor, an ASIC, an FPGA, a controller, a microcontroller, etc.) and can be one processor or a plurality of processors that are operatively connected. Memory 52 can include one or more non-transitory computer-readable storage media, such as HBM, RAM, ROM, EEPROM, EPROM, flash memory devices, magnetic disks, etc., and combinations thereof. Memory 52 can store data 53 and instructions 54 which can be executed by processor(s) 51 to cause computing device 50 to perform operations. The operations can implement any one or multiple features described herein. The operations can implement example methods and techniques described herein.

Computing device 50 can also include one or more input components that receive user input. For example, a user input component can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, camera, LIDAR, a physical keyboard or other buttons, or other means by which a user can provide user input.

Computing device 50 can store or include one or more machine-learned models 55. Machine-learned models 55 can include one or more machine-learned model(s) 1101 , such as a sequence processing model 4. Machine-learned models 55 can include one or multiple model instance(s) 31-1. Machine-learned model(s) 55 can be received from server computing system(s) 60, model development platform system 70, third party system(s) 80 (e.g., an application distribution platform), or developed locally on computing device 50. Machine-learned model(s) 55 can be loaded into memory 52 and used or otherwise implemented by processor(s) 51. Computing device 50 can implement multiple parallel instances of machine-learned model(s) 55.

Server computing system(s) 60 can include one or more processors 61 and a memory 62. Processor(s) 61 can be any suitable processing device (e.g., a processor core, a microprocessor, an ASIC, an FPGA, a controller, a microcontroller, etc.) and can be one processor or a plurality of processors that are operatively connected. Memory 62 can include one or more non-transitory computer-readable storage media, such as HBM, RAM, ROM, EEPROM, EPROM, flash memory devices, magnetic disks, etc., and combinations thereof. Memory 62 can store data 63 and instructions 64 which can be executed by processor(s) 61 to cause server computing system(s) 60 to perform operations. The operations can implement any one or multiple features described herein. The operations can implement example methods and techniques described herein.

In some implementations, server computing system 60 includes or is otherwise implemented by one or multiple server computing devices. In instances in which server computing system 60 includes multiple server computing devices, such server computing devices can operate according to sequential computing architectures, parallel computing architectures, or some combination thereof.

Server computing system 60 can store or otherwise include one or more machine-learned models 65. Machine-learned model(s) 65 can be the same as or different from machine-learned model(s) 55. Machine-learned models 65 can include one or more machine-learned model(s) 1101 , such as a sequence processing model 4. Machine-learned models 65 can include one or multiple model instance(s) 31-1. Machine-learned model(s) 65 can be received from computing device 50, model development platform system 70, third party system(s) 80, or developed locally on server computing system(s) 60. Machine-learned model(s) 65 can be loaded into memory 62 and used or otherwise implemented by processor(s) 61. Server computing system(s) 60 can implement multiple parallel instances of machine-learned model(s) 65.

In an example configuration, machine-learned models 65 can be included in or otherwise stored and implemented by server computing system 60 to establish a client-server relationship with computing device 50 for serving model inferences. For instance, server computing system(s) 60 can implement model host 31 on behalf of client(s) 32 on computing device 50. For instance, machine-learned models 65 can be implemented by server computing system 60 as a portion of a web service (e.g., remote machine-learned model hosting service, such as an online interface for performing machine-learned model operations over a network on server computing system(s) 60). For instance, server computing system(s) 60 can communicate with computing device 50 over a local intranet or internet connection. For instance, computing device 50 can be a workstation or endpoint in communication with server computing system(s) 60, with implementation of machine-learned models 65 being managed by server computing system(s) 60 to remotely perform inference (e.g., for runtime or training operations), with output(s) returned (e.g., cast, streamed, etc.) to computing device 50. Machine-learned models 65 can work cooperatively or intraoperatively with machine-learned models 55 on computing device 50 to perform various tasks.

Model development platform system(s) 70 can include one or more processors 71 and a memory 72. Processor(s) 71 can be any suitable processing device (e.g., a processor core, a microprocessor, an ASIC, an FPGA, a controller, a microcontroller, etc.) and can be one processor or a plurality of processors that are operatively connected. Memory 72 can include one or more non-transitory computer-readable storage media, such as HBM, RAM, ROM, EEPROM, EPROM, flash memory devices, magnetic disks, etc., and combinations thereof. Memory 72 can store data 73 and instructions 74 which can be executed by processor(s) 71 to cause model development platform system(s) 70 to perform operations. The operations can implement any one or multiple features described herein. The operations can implement example methods and techniques described herein. Example operations include the functionality described herein with respect to model development platform 12. This and other functionality can be implemented by developer tool(s) 75.

Third-party system(s) 80 can include one or more processors 81 and a memory 82. Processor(s) 81 can be any suitable processing device (e.g., a processor core, a microprocessor, an ASIC, an FPGA, a controller, a microcontroller, etc.) and can be one processor or a plurality of processors that are operatively connected. Memory 82 can include one or more non-transitory computer-readable storage media, such as HBM, RAM, ROM, EEPROM, EPROM, flash memory devices, magnetic disks, etc., and combinations thereof. Memory 82 can store data 83 and instructions 84 which can be executed by processor(s) 81 to cause third-party system(s) 80 to perform operations. The operations can implement any one or multiple features described herein. The operations can implement example methods and techniques described herein. Example operations include the functionality described herein with respect to tools and other external resources called when training or performing inference with machine-learned model(s) 1101 , 4, 16, 20, 55, 65, etc. (e.g., third-party resource(s) 85).

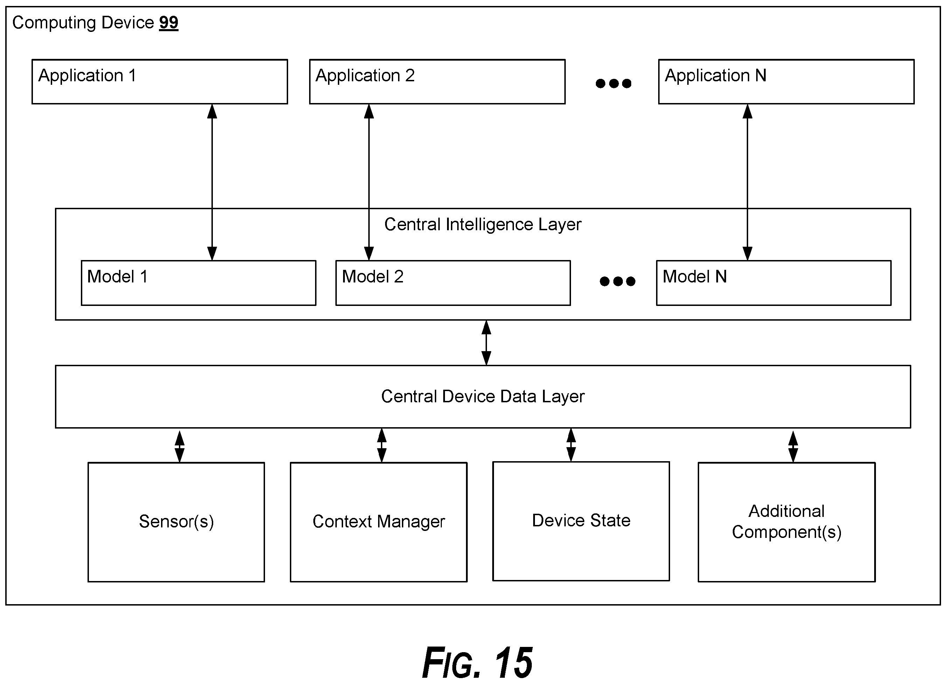

Figure 15 illustrates one example arrangement of computing systems that can be used to implement the present disclosure. Other computing system configurations can be used as well. For example, in some implementations, one or both computing system 50 or server computing system(s) 60 can implement all or a portion of the operations of model development platform system 70. For example, computing system 50 or server computing system(s) 60 can implement developer tool(s) 75 (or extensions thereof) to develop, update/train, or refine machine-learned models 1, 4, 16, 20, 55, 65, etc. using one or more techniques described herein with respect to model alignment toolkit 17. In this manner, for instance, computing system 50 or server computing system(s) 60 can develop, update/train, or refine machine-learned models based on local datasets (e.g., for model personalization/customization, as permitted by user data preference selections).

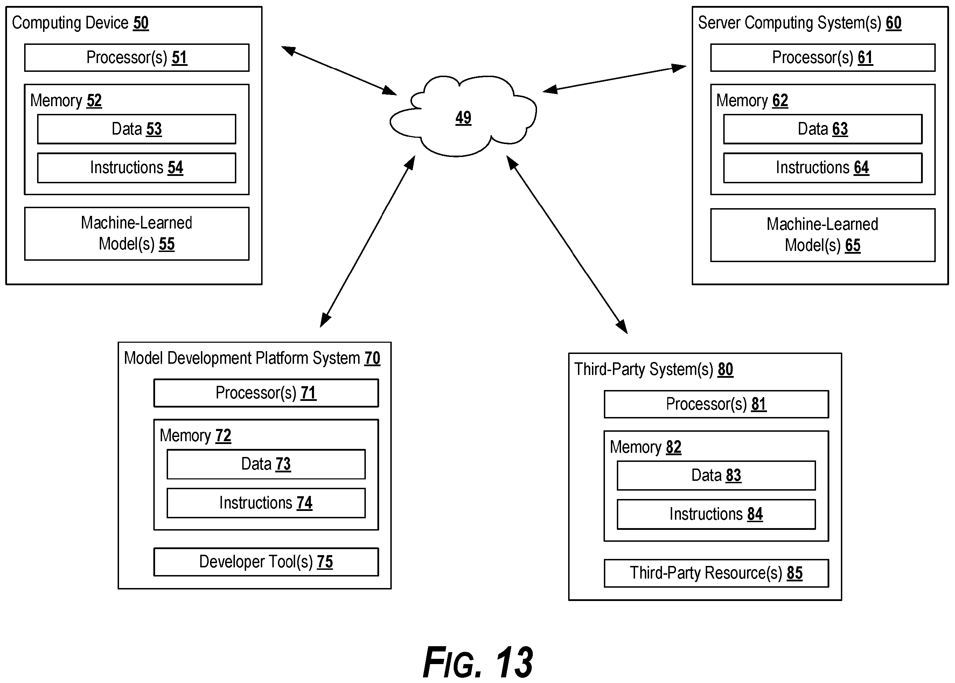

Figure 13 is a block diagram of an example computing device 98 that performs according to example embodiments of the present disclosure. Computing device 98 can be a user computing device or a server computing device (e.g., computing device 50, server computing system(s) 60, etc.). Computing device 98 can implement model host 31. For instance, computing device 98 can include a number of applications (e.g., applications 1 through N). Each application can contain its own machine learning library and machine-learned model(s). For example, each application can include a machine-learned model. Example applications include a text messaging application, an email application, a dictation application, a virtual keyboard application, a browser application, etc. As illustrated in Figure 24, each application can communicate with a number of other components of the computing device, such as, for example, one or more sensors, a context manager, a device state component, or additional components. In some implementations, each application can communicate with each device component using an API (e.g., a public API). In some implementations, the API used by each application is specific to that application.

Figure 14 is a block diagram of an example computing device 99 that performs according to example embodiments of the present disclosure. Computing device 99 can be the same as or different from computing device 98. Computing device 99 can be a user computing device or a server computing device (e.g., computing device 50, server computing system(s) 60, etc.). Computing device 98 can implement model host 31. For instance, computing device 99 can include a number of applications (e.g., applications 1 through N). Each application can be in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer can include a number of machine-learned models. For example, as illustrated in Figure 25, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of computing device 99.

The central intelligence layer can communicate with a central device data layer. The central device data layer can be a centralized repository of data for computing device 99. As illustrated in Figure 25, the central device data layer can communicate with a number of other components of the computing device, such as, for example, one or more sensors, a context manager, a device state component, or additional components. In some implementations, the central device data layer can communicate with each device component using an API (e.g., a private API).

The technology discussed herein makes reference to servers, databases, software applications, and other computer-based systems, as well as actions taken, and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to various specific example embodiments thereof, each example is provided by way of explanation, not limitation of the disclosure. Those skilled in the art, upon attaining an understanding of the foregoing, can readily produce alterations to, variations of, and equivalents to such embodiments. Accordingly, the subject disclosure does not preclude inclusion of such modifications, variations or additions to the present subject matter as would be readily apparent to one of ordinary skill in the art. For instance, features illustrated or described as part of one embodiment can be used with another embodiment to yield a still further embodiment. Thus, it is intended that the present disclosure covers such alterations, variations, and equivalents.

Aspects of the disclosure have been described in terms of illustrative embodiments thereof. Any and all features in the following claims can be combined or rearranged in any way possible, including combinations of claims not explicitly enumerated in combination together, as the example claim dependencies listed herein should not be read as limiting the scope of possible combinations of features disclosed herein. Accordingly, the scope of the present disclosure is by way of example rather than by way of limitation, and the subject disclosure does not preclude inclusion of such modifications, variations or additions to the present subject matter as would be readily apparent to one of ordinary skill in the art. Moreover, terms are described herein using lists of example elements joined by conjunctions such as "and" "or" "but" etc. It should be understood that such conjunctions are provided for explanatory purposes only. Clauses and other sequences of items joined by a particular conjunction such as "or" for example, can refer to "and/or" "at least one of", "any combination of' example elements listed therein, etc. Terms such as "based on" should be understood as "based at least in part on."

The term "can" should be understood as referring to a possibility of a feature in various implementations and not as prescribing an ability that is necessarily present in every implementation. For example, the phrase "X can perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

The term "may" should be understood as referring to a possibility of a feature in various implementations and not as prescribing an ability that is necessarily present in every implementation. For example, the phrase "X may perform Y" should be understood as indicating that, in various implementations, X has the potential to be configured to perform Y, and not as indicating that in every instance X must always be able to perform Y. It should be understood that, in various implementations, X might be unable to perform Y and remain within the scope of the present disclosure.

## Claims

1. A computer-implemented method for generating a final answer to a first query, the method comprising:
obtaining a user query, the user query being associated with a first category;
processing, using a first machine-learned model, the user query to generate a plurality of subqueries, the plurality of subqueries being associated with subcategories of the first category;
generating a plurality of search results based on the plurality subqueries;
processing, using the first machine-learned model, the plurality of search results to generate a first proxy phrase;
calculate, using the first machine-learned model and based on the plurality of search results, a ranking score for the first proxy phrase; and
obtaining, from a content server and based on the ranking score, a first content item associated with the first proxy phrase.

2. The method of claim 1, the method further comprising:
processing, using an independent artificial intelligence (AI) model, the plurality of search results to generate a summarized version of the plurality of search results; and
updating the ranking score, using the first machine-learned model, based on the summarized version of the plurality of search results.

3. The method of claim 1 or 2, the method further comprising:
causing a presentation of the first content item with an answer to the user query on a display of a user device, the answer to the user query generated by an artificial intelligence (AI) search assistant configured to generate an answer to the user query.

4. The method of claim 3, wherein the obtaining of the first content item is performed in parallel with generating the AI search assistant generating the answer to the user query.

5. The method of claim 3, the method further comprising:
processing, using the AI search assistant, the user query to generate an approximate answer; and
calculating the ranking score based on a similarity between the first proxy phrase and the approximate answer.

6. The method of claim 5, wherein the first proxy phrase includes a plurality of words that are similar to words in the approximate answer.

7. The method of any preceding claim, wherein the first content item is not retrieved from the content server when the ranking score is below a threshold value,
wherein the ranking score is optionally below a threshold value when the user query is a non-commercial query.

8. The method of any preceding claim, the method further comprising:
obtaining a search result for each of the subcategories of the first category to generate the plurality of search results; and
generating a plurality of keywords based on an analysis of the plurality of search results.

9. The method of claim 8, wherein the plurality of keywords is based on a summary of key points associated with the search result for each of the subcategories of the first category; and/or
The method further comprising:
calculating the ranking score for the first proxy phrase based on the plurality of keywords.

10. The method of any preceding claim, the method further comprising:
processing, using the first machine-learned model, the plurality of search results to generate a second proxy phrase when the ranking score exceeds a threshold value, and
wherein the first content item is also based on the second proxy phrase,
the method optionally further comprising:
obtaining, from the content server, a second content item associated with the second proxy phrase.

11. The method of any preceding claim, wherein the first machine-learned model is trained using a plurality of large language models.

12. The method of any preceding claim, the method further comprising:
obtaining user information and contextual information associated with the user query, the contextual information including a previous query; and
processing, using the first machine-learned model, the user information, the contextual information, and the plurality of search results to generate the first proxy phrase.

13. The method of any preceding claim, the method further comprising:
processing, using the first machine-learned model, the user query to determine whether the user query is associated with a product or a service; and
in response to the determination that the user query is associated with a product or a service, generating the first proxy phrase; and/or
the operations further comprising:
processing, using the first machine-learned model, the user query to determine whether the user query is associated with a product or a service, and
generating an answer to the user query, wherein the answer does not include a link to a product or service when determined that the user query is not associated with a product or service.

14. A computing system, comprising:
one or more processors; and
one or more non-transitory computer-readable media that collectively store:
a first machine-learned model, wherein the first machine-learned model is configured to generate a proxy phrase; and
instructions that, when executed by the one or more processors, cause the computing system to perform operations, the operations comprising a method according to any preceding claim.

15. One or more non-transitory computer-readable media that collectively store instructions that, when executed by one or more processors, cause a computing system to perform operations, the operations comprising a method according to any one of claims 1 to 13.
